# EUROPÄISCHE PATENTSCHRIFT

(11) **EP 0 982 058 B1**
(45) Veröffentlichungstag und Bekanntmachung des Hinweises auf die Patenterteilung: **31.07.2002**
(21) Anmeldenummer: 99119992.8
(22) Anmeldetag: 25.08.1997
(51) Int. Cl.: B01D 29/09, B01D 29/90

(54) **Vorrichtung zum Entwässern von Schlamm und ähnlichen Substanzen**
Apparatus for de-watering sludge and similar substances
Appareil de déshydratation de boues et substances similaires

(30) Priorität: 28.08.1996 DE 29614898 U; 01.07.1997 DE 19727762
(43) Veröffentlichungstag der Anmeldung: 01.03.2000
(62) Teilanmeldung aus: 97114707.9
(73) Patentinhaber: Bähr, Albert, D-66564 Ottweiler (DE)
(72) Erfinder: Bähr, Albert, D-66564 Ottweiler (DE)
(74) Vertreter: Brose, D. Karl

(56) Entgegenhaltungen:
- EP-A- 0 714 687

## Beschreibung

Die Erfindung betrifft eine Vorrichtung zum Entwässern von Schlamm und ähnlichen Substanzen mit einer Filterflächen aufweisenden Schlammkammer, mit mindestens einem Schlammeinlaß mit einer, einen hydrostatischen Filtrationsdruck erzeugenden Einrichtung, welche einen mit der Vorentwässerungsvorrichtung verbundenen Schlammeinlaß und einen mit dem mindestens einen Schlammeinlaß verbundenen Schlammauslaß aufweist, wobei am Schlammeinlaß und am Schlammauslaß alternierend betätigbare Sperr- und Steuerventile angeordnet sind, wobei die Schlammkammer durch Druckplatten gebildet ist, von denen mindestens eine zur Verringerung des Volumens der Schlammkammer nach Erreichen des hydrostatischen Entwässerungsdrucks durch Hochdruckerzeuger relativ beweglich ist, wobei ferner eine, Filterflächen enthaltende Vorentwässerungseinrichtung vorgesehen ist, welche als Ausgleichsbehälter ausgebildet und an eine kontinuierliche Schlammzufuhr angeschlossen und mit der den hydrostatischen Filtrationsdruck erzeugenden Einrichtung verbunden ist, und wobei die Filterflächen der Schlammkammer zum Austragen des Filterkuchens nach Öffnen der Druckplatten bezüglich der Schlammkammer verschiebbar ausgebildet sind.

Eine Vorrichtung dieser Art ist nach einem früheren Vorschlag des Anmelders beispielsweise aus der EP-A-0714687 bekannt. Obwohl vom Wirkungsgrad her gesehen die nach dem früheren Vorschlag bekannte Konstruktion eine quasi kontinuierlich arbeitende Kammerfilterpresse darstellt, ist der hierzu erforderliche konstruktive Aufwand vergleichsweise hoch. Darüber hinaus wird der hydrostatische Entwässerungsdruck bei dieser bekannten Vorrichtung mittels injektionsspritzenartigen Kolbenzylindereinheiten aufgebaut, was hinsichtlich der Schonung des mit einem Flockungsmittel versetzten Schlamms gewisse Nachteile mit sich bringt, da der Schlamm beim Füllen und Entleeren der Kolbenzylindereinheiten mehrfach um 90° umgelenkt werden muß, wodurch die Flockung des Schaums stark beeinträchtigt werden kann.

Der Erfindung liegt daher ausgehend von diesem Stand der Technik die Aufgabe zugrunde, diese bekannte Konstruktion dahingehend zu verbessern, daß bei möglichst geringem konstruktiven Aufwand und bei großem Durchsatz optimale Entwässerungsgrade erreichbar sind, während gleichzeitig der geflockte Schlamm so schonend wie möglich behandelt wird.

Diese Aufgabe wird erfindungsgemäß im wesentlichen dadurch gelöst, daß die Einrichtung zur Erzeugung des hydrostatischen Entwässerungsdrucks als ein oder mehrere im Volumen veränderbare Behälter ausgebildet ist, und daß die Behälter axial durchströmt sind, wobei die Behälterachse in den Achsen der Schlammauslaßleitung der Vorentwässerungseinrichtung und der Schlammeinlaßleitung der Schlammkammer liegt. Durch die Erfindung wird insbesondere der Vorteil erzielt, daß der hydrostatische Entwässerungsdruck ausgesprochen schonend aufgebaut wird, indem der geflockte Schlamm durch die im Volumen veränderbaren Behälter mit Druck beaufschlagt wird, d.h., mechanisch in einer Weise behandelt wird, die sicherstellt, daß die Flockung nicht zerstört werden kann. Hierbei wird der zusätzliche Vorteil erzielt, daß der Schlamm ohne in seiner Flußrichtung umgelenkt werden zu müssen, von der Vorentwässerungseinrichtung geradlinig in die Schlammkammer gelangt, so daß eine ausgesprochen schonende Behandlung des geflockten Schlamms gewährleistet ist. Darüber hinaus wird konstruktiv die erfindungsgemäße Vorrichtung ausgesprochen kompakt und kostengünstig aufgebaut, indem lediglich noch eine der Druckplatten zur Erzeugung des mechanischen zusätzlichen Entwässerungsdrucks beweglich ist, und indem die Vorentwässerungseinrichtung oberhalb der oberen ortsfesten Druckplatte angeordnet ist. Durch letzteres Merkmal wird zusätzlich ein ausgesprochen schonender und kurzer Weg des vorentwässerten Schlamms zu den im Volumen veränderbaren Behältern gewährleistet.

Im einzelnen ist es hierbei möglich, die Behälter als seitlich zusammendrückbare Bälge nach Art von Balgpumpen auszubilden.

Besonders bevorzugt ist es jedoch bei dieser Ausführungsform nach der Erfindung, die Behälter als in der Länge axial veränderbare Faltenbälge auszubilden, da hierdurch der konstruktive Aufwand am geringsten ist, und eine noch schonendere Behandlung des geflockten Schlamms erreicht wird.

Bei einer bevorzugten Ausführungsform nach der Erfindung weist die Schlammkammer mehrere Schlammeinlässe auf, und es ist eine entsprechende Anzahl von Behältern vorgesehen, bei denen jeder Schlammauslaß durch eine separate Verbindungsleitung mit einem der Schlammeinlässe der Schlammkammer verbunden ist. Hierdurch ist ein schnelles und ausgesprochen schonendes Füllen der Schlammkammer möglich, da der vorentwässerte Schlamm wesentlich kürzere Wege innerhalb der Schlammkammer zurücklegen muß.

Die Sperr- und Steuerventile können als Flachschieber ausgebildet sein, wobei jedoch, um den konstruktiven Aufwand noch geringer zu gestalten, es bei einer besonders bevorzugten Ausführungsform nach der Erfindung vorgesehen ist, daß die Sperr- und Steuerventile als die Anzahl von Schlammeinlässen und/oder die Anzahl von Schlammauslässen jeweils gleichzeitig öffnende bzw. schließende Drehscheiben auszubilden, daß die der Anzahl von Schlammauslässen zugeordnete Drehscheibe unmittelbar an den Schlammeinlässen der Schlammkammer angeordnet ist, und daß die Drehscheibe durch Federn gegen eine Dichtung vorgespannt ist. Hierbei wird durch ein einziges konstruktives Bauteil, nämlich die Drehscheibe eine gleichzeitige Betätigung der Sperr- und Steuerventile erreicht wobei gewährleistet wird, daß die Schlammkammer bei Beginn des Aufbaus des hydrostatischen Entwässerungsdrucks ausreichend abgedichtet ist, während bei steigendem Druck die Dichtwirkung dadurch zunimmt, daß durch den Innendruck der Schlammkammer die Drehscheibe mit steigendem Druck gegen die Dichtung gepreßt wird.

Im einzelnen kann die Erfindung dadurch weitergebildet werden, daß die Filterflächen der Vorentwässerungseinrichtung etwa 90 % und die Filterflächen der Schlammkammer etwa 10 % der gesamten Filterflächen der Vorrichtung betragen, daß die Schlammkammer einen runden Umriß aufweist, und daß die Filterflächen der Schlammkammer durch ein auf der beweglichen unteren Druckplatte geradlinig hin und her verfahrbares Filterband gebildet sind. Hierdurch ist eine optimale Druckverteilung und darüber hinaus eine besonders einfache Konstruktion der Abdichtung möglich. Gleichzeitig wird erreicht, daß der Filterkuchen einfach seitlich aus der geöffneten Schlammkammer ausgefahren werden kann, wonach dann in einfachster Weise eine Reinigung des Filtertuchs bei dessen Rücklauf erfolgen kann, während dieses wieder in die Schlammkammer eingefahren wird.

Ferner ist es bevorzugt, daß die Schlammkammer durch eine an der oberen ortsfesten Druckplatte befestigte, ringförmige, flexible Dichtung umgeben ist, und daß die Dichtung mittels in der ortsfesten Druckplatte gelagerten Stößeln in Richtung der beweglichen Druckplatte federvorgespannt ist. Hierdurch wird der konstruktive Aufwand zum Abdichten der Schlammkammer in geschlossener Stellung so gering wie möglich gehalten. Hierdurch wird erreicht, daß ein sicheres Abdichten der Schlammkammer insbesondere auch während des Aufbaus des hydrostatischen Entwässerungsdrucks gewährleistet ist.

Ferner ist es bevorzugt, daß innerhalb der Schlammkammer die Filterfläche auf einer Lagerplatte abgestützt ist, welche mit zur Filterfläche offenen Kanälen versehen ist, und daß die Kanäle hierbei als Bohrungen ausgebildet sind. Hierdurch wird eine schnelle und sichere Abführung des bei der Entwässerung entstehenden Filtrats auf der Außenseite der Filterfläche gewährleistet.

Im einzelnen ist es ferner bevorzugt, daß die Lagerplatte in dem der Dichtung gegenüberliegenden Bereich eine flache kreisförmige Vertiefung aufweist, und daß in der Vertiefung bevorzugt Entlastungsbohrungen vorgesehen sind, die das Zusammendrücken der flexiblen Dichtung erleichtern. Diese Vertiefung wird spanabhebend in der ansonsten nicht bearbeiteten Oberfläche der Lagerplatte hergestellt und bietet eine optimale Anlagefläche für die Dichtung. Hierdurch wird eine besonders sichere Abdichtung der Schlammkammer gewährleistet.

Im einzelnen kann die Erfindung dadurch weitergebildet werden, daß die Hochdruckerzeuger seitlich außerhalb des Bereichs der Schlammkammer angeordnet sind, und daß die Hochdruckerzeuger als hydraulische Einfachzylinder ausgebildet sind.

Diese Ausführungsform bietet den Vorteil, daß sich sehr große Drücke mit vergleichsweise kostengünstigen Hochdruckerzeugern erzielen lassen, und gleichzeitig eine mechanisch sichere und einfache Konstruktion geschaffen wird.

Bei einer besonders bevorzugten Weiterbildung der Erfindung ist die geschlossene Stellung der Schlammkammer mechanisch verriegelbar, wobei in vorteilhafter Weise zur Verriegelung eine auf die untere bewegliche Druckplatte wirkende Sperrklinkenvorrichtung vorgesehen ist. Hierdurch wird der Vorteil erzielt, daß während der Entwässerung unter hydrostatischem Druck die Schlammkammer sicher und mit einfachsten Mitteln geschlossen gehalten wird, so daß diese Aufgabe nicht von den Hochdruckerzeugern übernommen werden muß. Die auftretenden Reaktionskräfte werden hierbei sicher und in mechanisch einfacher Weise aufgenommen.

Besonders bevorzugt ist es ferner, daß die Vorentwässerungseinrichtung einen kreisförmigen Querschnitt aufweist, daß die Vorentwässerungseinrichtung zwei konzentrische Filterkörbe enthält, deren Zwischenraum mit der kontinuierlichen Schlammzufuhr verbunden ist, daß die Schlammauslässe im Boden des Zwischenraums zwischen den Filterkörben angeordnet sind, und daß die Schlammeinlässe der Behälter unmittelbar unter den Schlammauslässen angeordnet sind. Hierdurch wird eine besonders kompakte Bauweise mit größtmöglicher Filterfläche erreicht, wobei gleichzeitig besonders schonende und kurze Wege für den geflockten und vorentwässerten Schlamm sichergestellt werden.

Dabei ist es besonders bevorzugt, daß auf der Filtratseite jedes Filterkorbes drehangetriebene Bürsten vorgesehen sind, welche über die Höhe der Filterkörbe reichen. Hierdurch wird die Entwässerungsleitung der Vorentwässerungsstufe erheblich gesteigert.

Bei der Ausführungsform nach der Erfindung bei der die Einrichtung zur Erzeugung des hydrostatischen Filtrationsdrucks aus Faltenbälgen besteht, ist es besonders bevorzugt, daß die Faltenbälge an der Vorentwässerungseinrichtung aufgehängt sind, und daß zur Erzeugung des hydrostatischen Filtrationsdrucks die obere und untere Druckplatte gemeinsam bei geschlossener Schlammkammer anhebbar sind, derart, daß beim Hub die Faltenbälge zusammengedrückt werden. Hierdurch ist bei geringem konstruktiven Aufwand sichergestellt, daß der hydrostatische Druck gleichmäßig in der Schlammkammer aufgebaut wird, wobei gleichzeitig Einzelantriebe für die Faltenbälge vermieden werden.

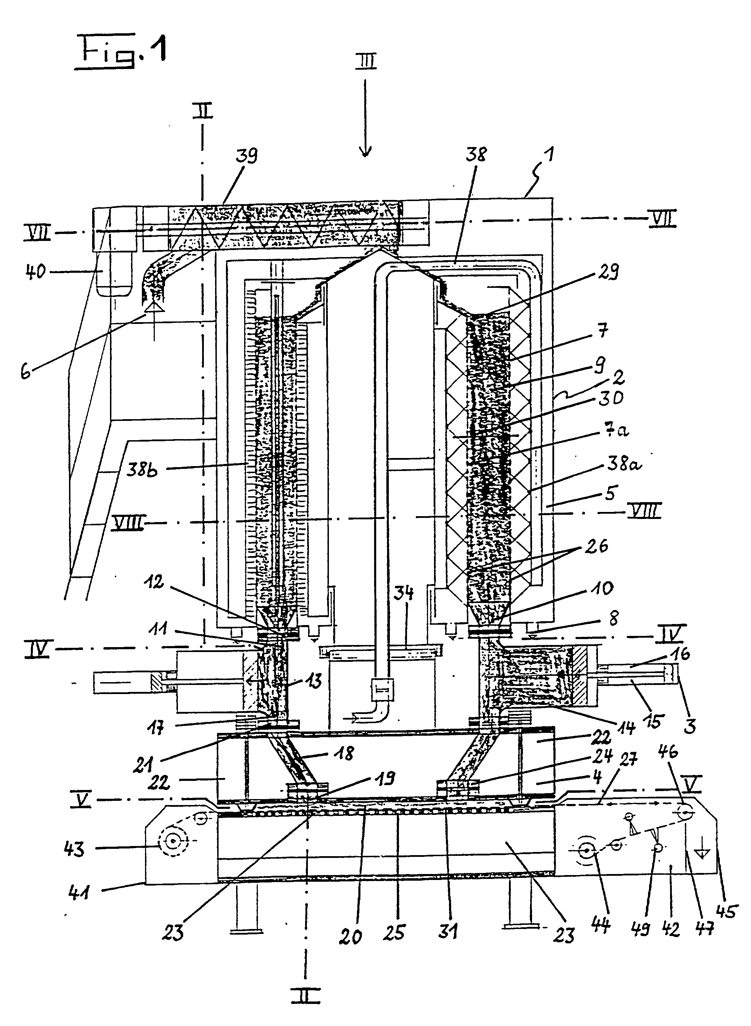

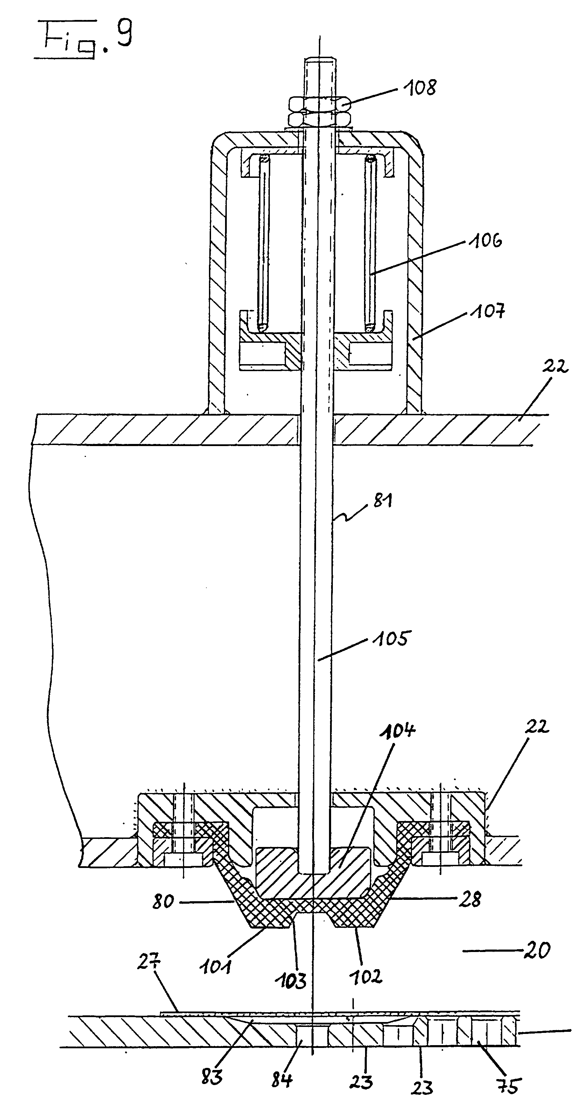

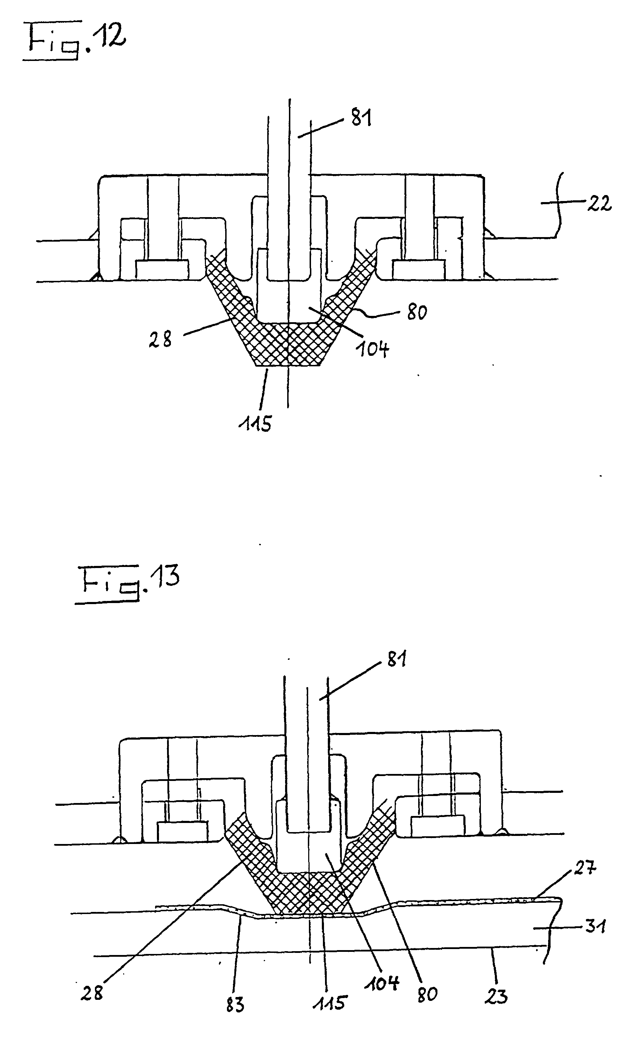

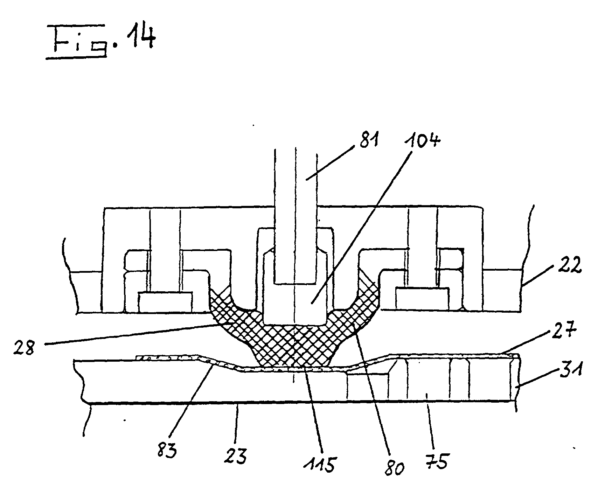

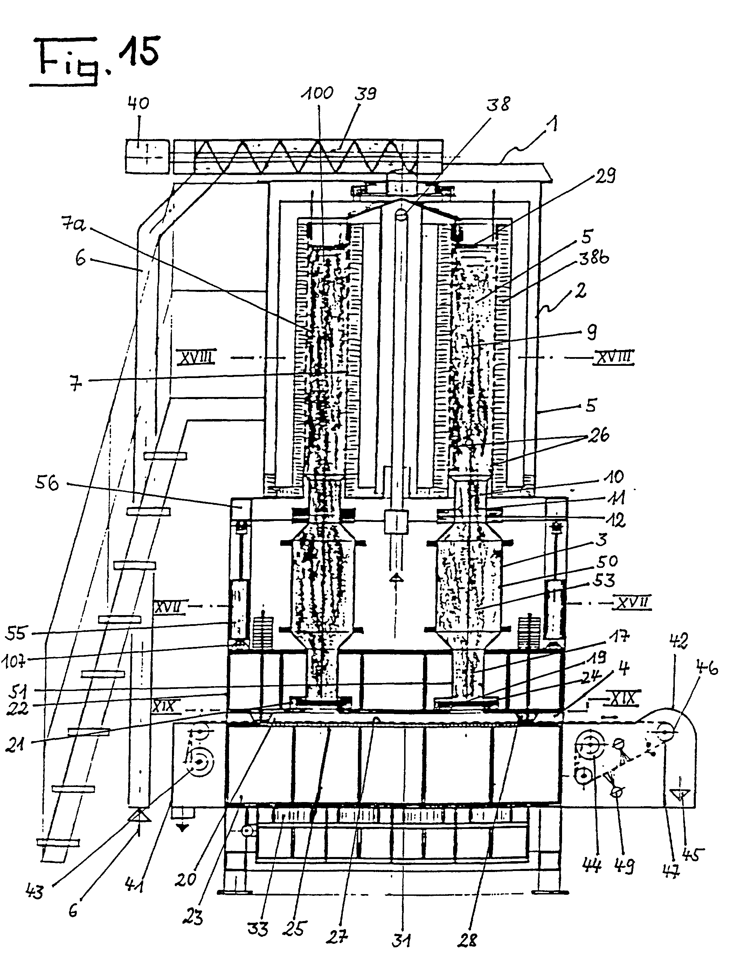

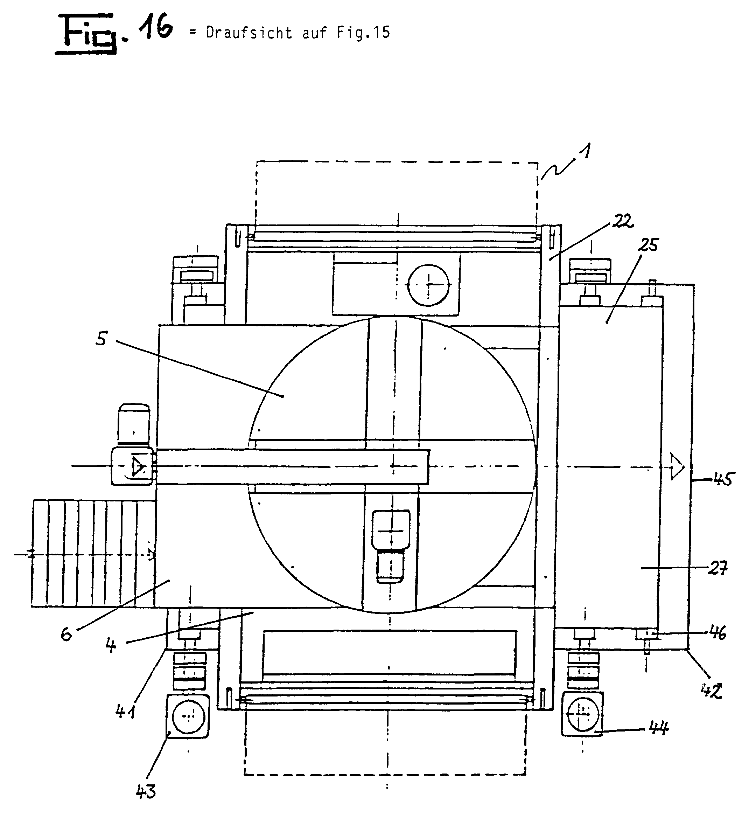

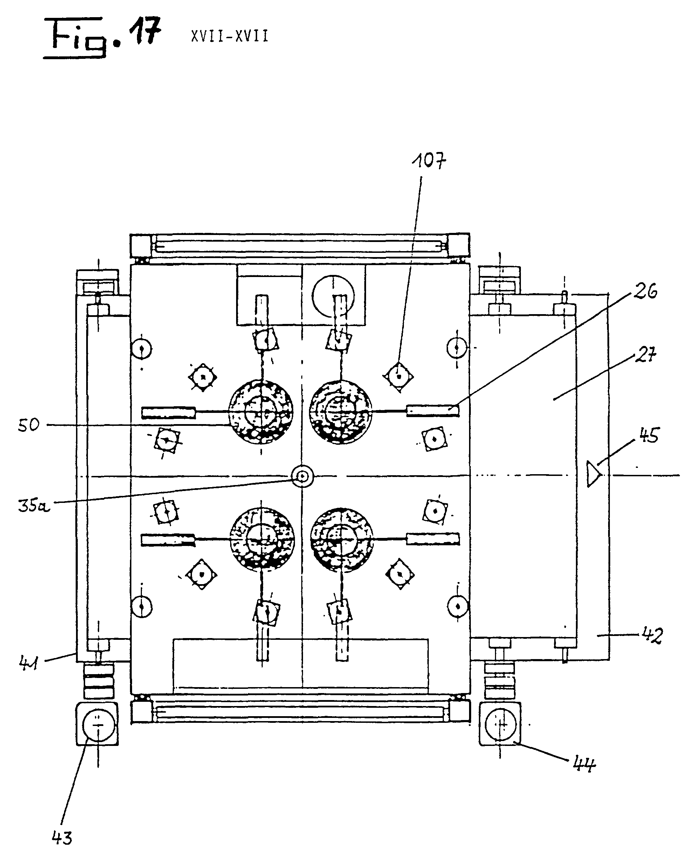

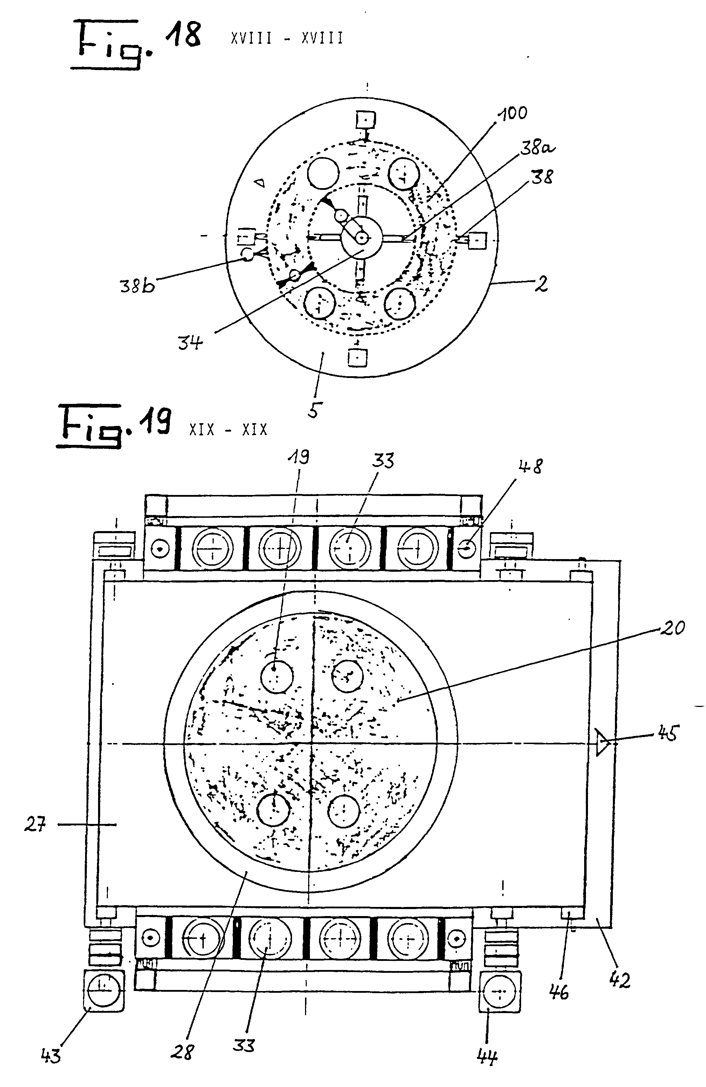

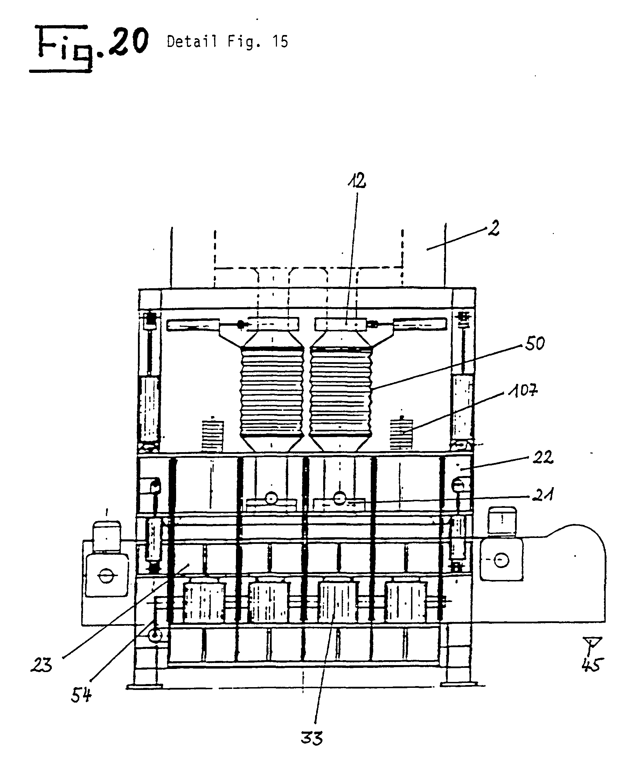

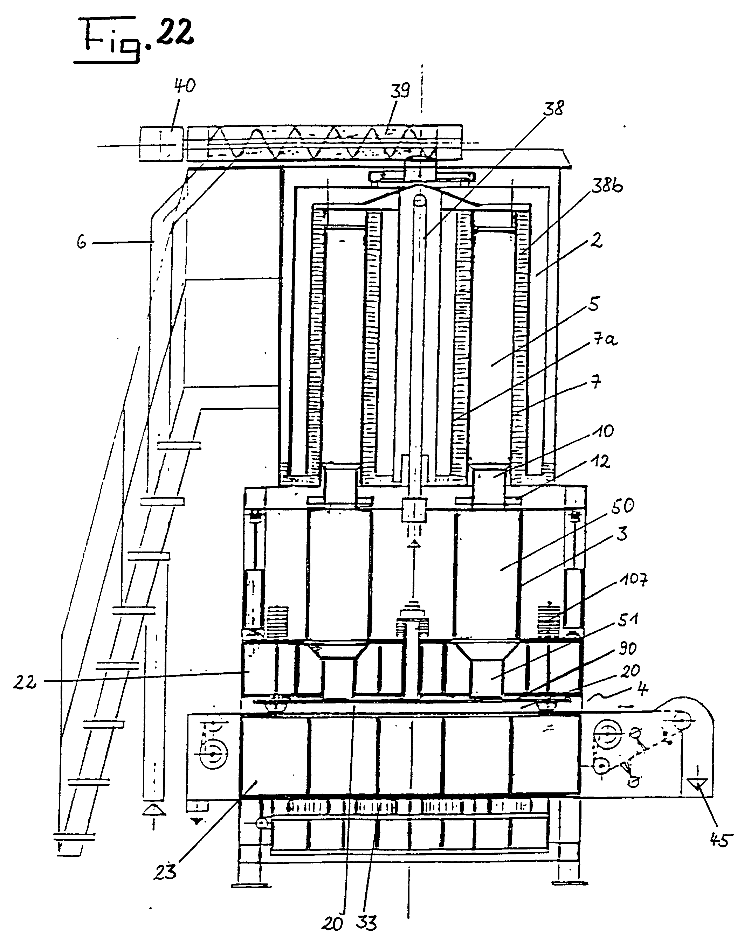

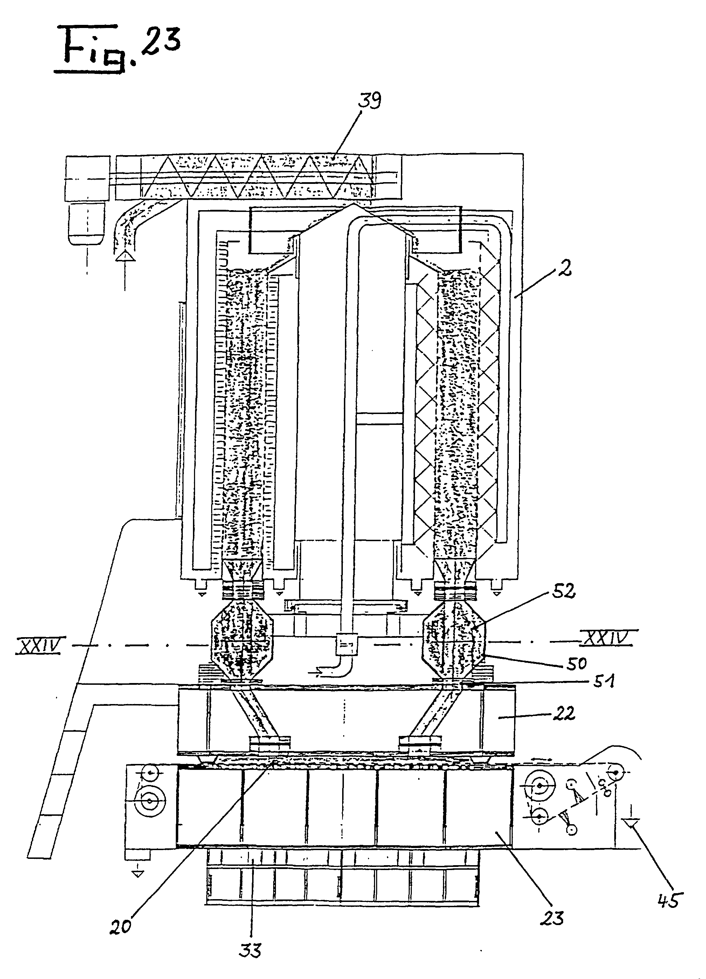

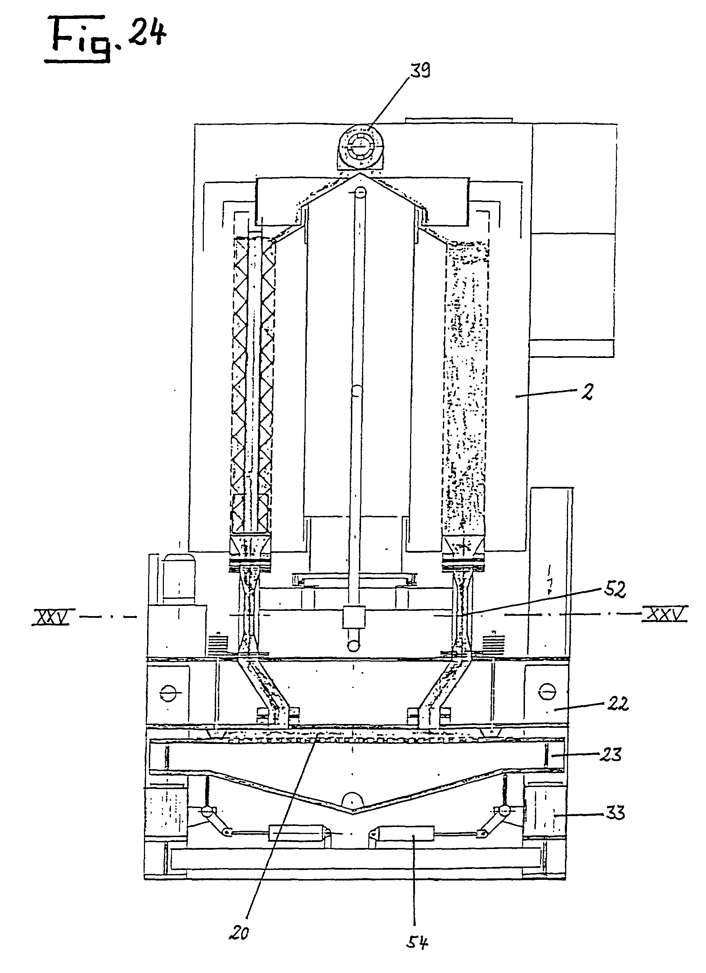

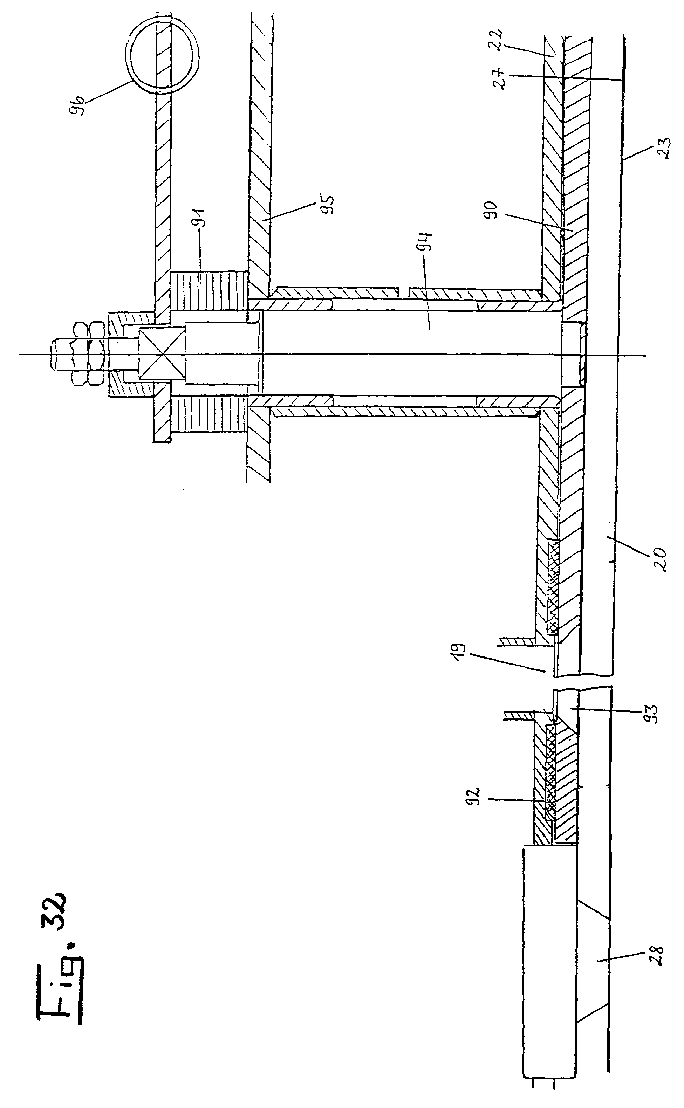

Im folgenden wird die Erfindung anhand von in den Zeichnungen beispielhaft veranschaulichten Ausführungsformen näher erläutert. Es zeigt:
**Figur 1:**
   eine seitliche schematische Schnittansicht einer Entwässerungsvorrichtung mit injektionsspritzenartigen Kolbenzylindereinheiten zur Erzeugung des hydrostatischen Filtrationsdrucks;
**Figur 2:**
   eine Schnittansicht längs der Linie II-II gem. Fig. 1;
**Figur 3:**
   eine Draufsicht der Vorrichtung gem. Fig. 1 in Richtung des Pfeils III in Fig. 1;
**Figur 4:**
   eine Schnittansicht längs der Linie IV-IV in Fig. 1;
**Figur 5:**
   eine Schnittansicht längs der Linie V-V in Fig. 1;
**Figur 6:**
   eine schematische Seitenansicht des die Schlammkammer enthaltenden Teils der Vorrichtung gem. Fig. 1;
**Figur 7:**
   eine Schnittansicht längs der Linie VII-VII in Fig. 1;
**Figur 8:**
   eine Schnittansicht längs der Linie VIII-VIII in Fig. 1;
**Figur 9:**
   im vergrößerten Maßstab eine Schnittansicht der Konstruktion der Dichtung der Schlammkammer im geöffneten Zustand;
**Figur 10:**
   die Dichtung gem. Fig. 9 im geschlossenen Zustand, während des Aufbaus des hydrostatischen Entwässerungsdrucks;
**Figur 11:**
   die Dichtung gem. Fig. 9 beim Aufbringen des zusätzlichen mechanischen Entwässerungsdrucks;
**Figur 12:**
   eine schematische Schnittansicht einer abgewandelten Ausführungsform der Dichtung gem. den Figuren 9 - 11;
**Figur 13:**
   eine Figur 12 entsprechende Ansicht einer weiteren Ausführungsform einer Dichtung im geschlossenen Zustand;
**Figur 14:**
   die Dichtung gem. Fig. 13 beim Aufbringen des zusätzlichen mechanischen Entwässerungsdrucks;
**Figur 15:**
   eine Fig. 1 entsprechende Schnittansicht der Ausführungsform der Vorrichtung nach der Erfindung;
**Figur 16:**
   eine Draufsicht auf die Vorrichtung gem. Fig. 15;
**Figur 17:**
   eine Schnittansicht der Vorrichtung gem. Fig. 15 längs der Linie 17-17 in Fig. 15;
**Figur 18:**
   eine Schnittansicht längs der Linie 18-18 in Fig. 15;
**Figur 19:**
   eine Schnittansicht längs der Linie 19-19 in Fig. 15;
**Figur 20:**
   eine Seitenansicht einer Einzelheit von Fig. 15;
**Figur 21:**
   die Vorrichtung gem. Fig. 15 in einer Fig. 15 entsprechenden Ansicht, jedoch beim Erzeugen des hydrostatischen Entwässerungsdrucks;
**Figur 22:**
   eine Fig. 15 entsprechende seitliche Schnittansicht einer abgewandelten Ausführungsform, bei welcher anstelle von einzelnen Schiebern eine sämtliche Schlammeinlässe zur Schlammkammer steuernde Drehscheibe vorgesehen ist;
**Figur 23:**
   eine Fig. 15 entsprechende seitliche Schnittansicht einer weiteren abgewandelten Ausführungsform nach der Erfindung, wobei der Betriebszustand beim Füllen der den hydrostatischen Entwässerungsdruck erzeugenden Behälter dargestellt ist, welche hier nach Art von Balgpumpen ausgebildet sind;
**Figur 24:**
   eine Fig. 23 entsprechend Ansicht der Vorrichtung gem. Fig. 23 bei Erzeugen des hydrostatischen Entwässerungsdrucks;
**Figur 25:**
   eine Schnittansicht längs der Linie 25-25 in Fig. 23 bzw. Fig. 24, wobei die beiden verschiedenen Betriebszustände der den hydrostatischen Entwässerungsdruck erzeugenden Behälter dargestellt sind, die
**Figuren 26 bis 31:**
   schematische Ansichten der verschiedenen Betriebszustände der Vorrichtung gem. Fig. 15;
**Figur 32:**
   eine Schnittansicht der anstelle von Flachschiebern bei der Ausführungsform gem. Fig. 22 vorgesehenen Drehscheibe im vergrößerten Maßstab und die
**Figuren 33 bis 35:**
   die verschiedenen Stellungen der Drehscheibe gem. Fig. 32 entsprechend den Betriebszuständen der Vorrichtung nach der Erfindung.

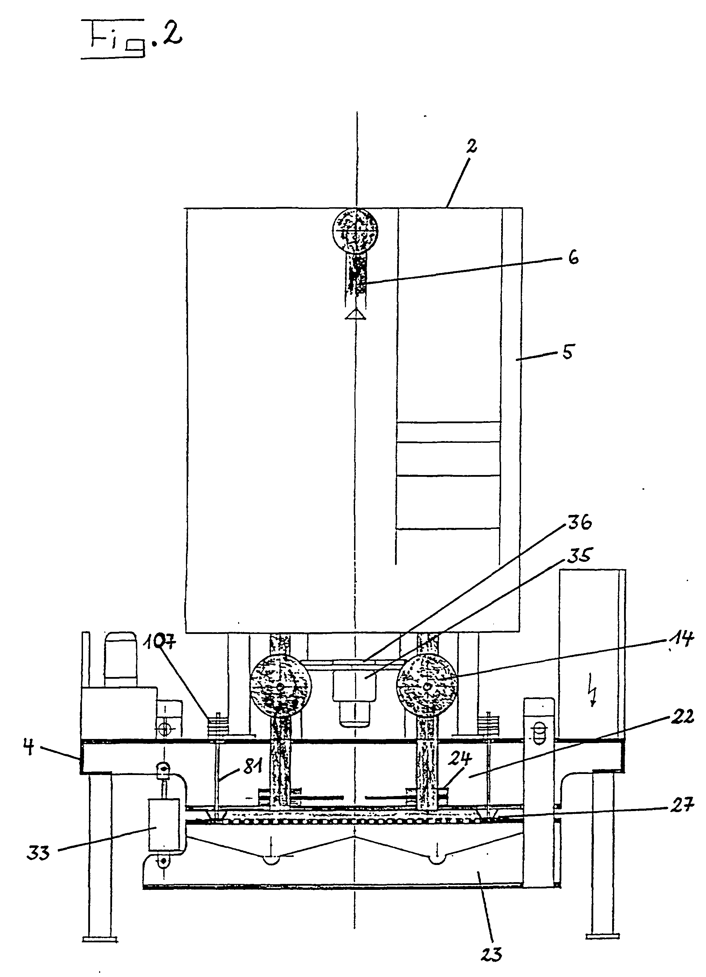

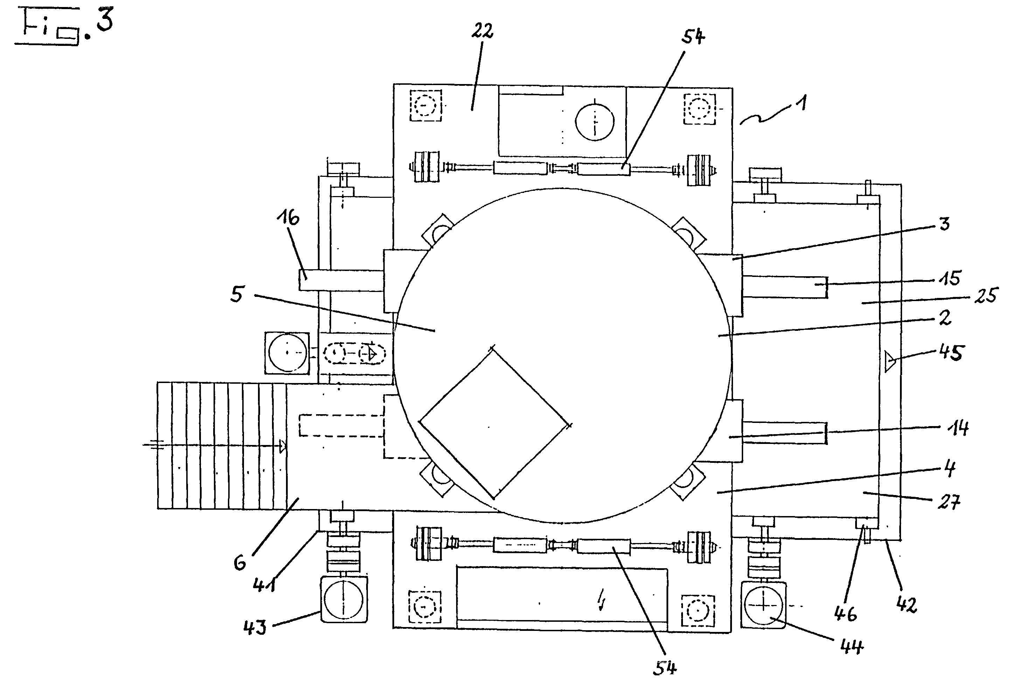

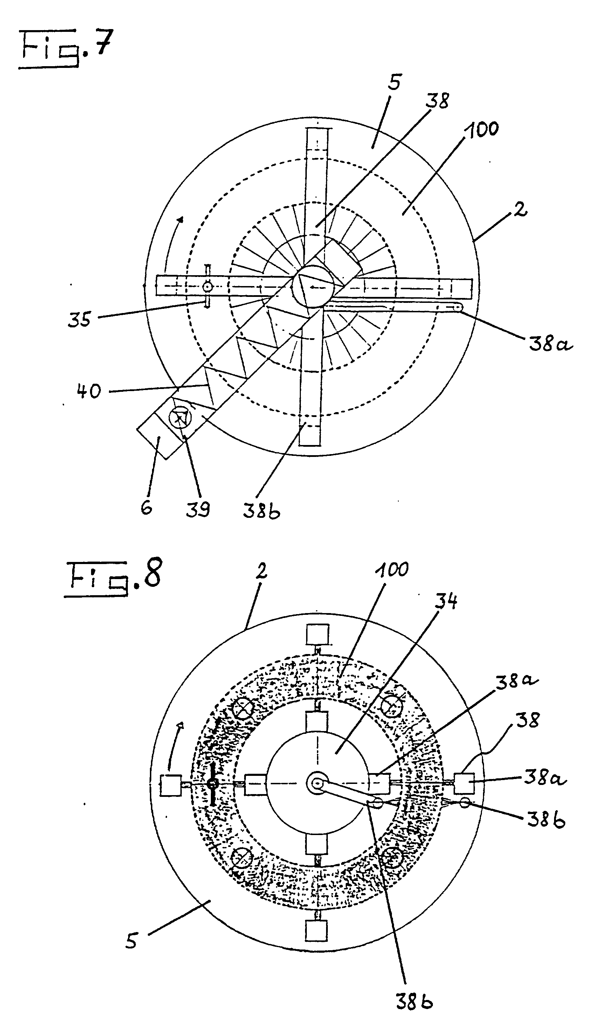

Die in den Figuren 1 - 8 veranschaulichte beispielhafte Ausführungsform der allgemein mit 1 bezeichneten Vorrichtung besteht aus drei Hauptbestandteilen, nämlich einer Vorentwässerungsstufe 2, einer Einrichtung 3 zur Erzeugung eines hydrostatischen Entwässerungsdrucks und der eigentlichen Filterpresse 4, wobei, wie weiter unten näher erläutert wird, die Einrichtung 3 entsprechend einem früheren Vorschlag des Anmelders gemäß der EP-A-0 714 687 als eine Anzahl injektionsspritzenartiger Kolbenzylindereinheiten ausgebildet ist.

Die Vorentwässerungsstufe 2 bildet einen Ausgleichsbehälter 5, welcher an eine kontinuierliche Schlammzufuhr 6 angeschlossen ist. In dem Ausgleichsbehälter 5, welcher durch die Vorentwässerungsstufe 2 gebildet wird, sind Filterkörbe 7, 7a angeordnet, wobei die Vorentwässerungsstufe am Unterende einer Anzahl von Filtratauslässen 8 aufweist. Die Filterkörbe 7, 7a nehmen zwischen sich in dem Zwischenraum 100 den in den Ausgleichsbehälter 5 kontinuierlich eingespeisten Schlamm 9 auf.

Am Unterende des Zwischenraums 100 zwischen den beiden konzentrisch angeordneten Filterkörben 7, 7a enthält die Vorentwässerungsstufe 2 eine Anzahl von Schlammauslaßleitungen 10, welche durch kurze trichterförmige Stutzen gebildet sind und welche mit den Schlammeinlässen 11 der Einrichtung 3 zur Erzeugung des hydrostatischen Drucks verbunden sind. Zwischen jeder Schlammauslaßleitung 10 und dem dazugehörigen Schlammeinlaß 11 ist ein als Flachschieber 12 ausgebildetes Sperrund Steuerventil angeordnet, durch welchen die Zufuhr von Schlamm in die Einrichtung 3 unterbrochen werden kann.

Wie bereits oben erwähnt, ist die Einrichtung 3 zur Erzeugung des hydro-statischen Filtrationsdrucks gemäß der EP-A-0 714 687 als eine Anzahl von injektions-spritzenartigen Kolbenzylindereinheiten 14 ausgebildet, in deren Zylinderkopf 13 der Schlammeinlaß 11 und ein bevorzugt koaxialer Schlammauslaß 17 ausgebildet ist. Der Kolben der Kolbenzylindereinheiten 14 ist mit seiner Kolbenstange mit einem Antrieb 15 verbunden, welcher in dem Ausführungs-beispiels durch einen Hydraulikkolben oder Pneumatikkolben 16 gebildet ist.

Der Schlammauslaß 17 der Kolbenzylindereinheiten 14 ist über eine kurze Leitung 18 mit einem dazugehörigen Schlammeinlaß 19 einer Schlammkammer 20 der Filterpresse 4 verbunden, wobei zwischen dem Schlammauslaß 17 und der Leitung 18 ein weiteres als Flachschieber 21 ausgebildetes Sperr- und Steuerventil vorgesehen ist. Wie insbesondere in Fig. 1 gezeigt, kann ein weiteres als Flachschieber 24 ausgebildetes Sperr- und Steuerventil bevorzugt unmittelbar an jedem Schlammeinlaß 19 der Schlammkammer 20 angeordnet sein, wobei der Flachschieber 24 synchron mit dem Flachschieber 21 betrieben wird, wie dies weiter unten näher erläutert wird.

Die Schlammkammer 20 der Filterpresse 4 ist zwischen einer oberen Druckplatte 22 und einer unteren Druckplatte 23 ausgebildet, wobei beim Ausführungsbeispiel die untere Druckplatte 23 in vertikaler Richtung beweglich gelagert ist.

Die Schlammkammer 20 wird durch die obere Druckplatte 22 und eine Filterfläche 25 auf der unteren Druckplatte 23 gebildet, wobei die Schlammkammer durch eine an der oberen Druckplatte 22 befestigte weiter unten näher erläuterte Dichtung rundum geschlossen ist, welche bei geschlossener Schlammkammer 20 dichtend gegen die Filterfläche 25 anliegt. Bevorzugt ist die Filterfläche 25 durch ein Filterband 27 gebildet, wobei das Filterband 27 auf einer Lagerplatte 31 liegt, die auf der unteren Druckplatte 23 befestigt ist. Die Lagerplatte 31 weist auf der dem Filterband 27 zugewandten Seiten Kanäle oder Bohrungen auf, die der Abförderung des durch das Filterband 27 austretenden Filtrats dient. Dies wird weiter unten noch näher erläutert.

Die somit allgemein beschriebene Vorrichtung 1 arbeitet derart, daß der zu entwässernde Schlamm durch die kontinuierliche Schlammzufuhr 6 fortlaufend in den durch die Vorentwässerungseinrichtung gebildeten Ausgleichsbehälter 5 eingespeist wird, wobei sich je nach Betriebszustand ein oberer Schlammspiegel 29 oder ein unterer Schlammspiegel 30 einstellen kann. Der kontinuierlich zugeführte Schlamm wird in dem Ausgleichsbehälter 5 einer kontinuierlichen Vorentwässerung unter Schwerkraftwirkung ausgesetzt, wobei das anfallende Filtrat aus den Filtratauslässen 8 abgeführt wird. Der in dem Zwischenraum 100 zwischen den Filterkörben 7 und 7a zurückgehaltene Schlamm 9 weist an den Auslaßleitungen 10 folglich bereits einen Trockensubstanzgehalt von etwa 20 % auf. Der Trockensubstanzgehalt nach der kontinuierlichen Vorentwässerung ist allgemein abhängig von dem ursprünglichen Trockensubstanzgehalt des Schlammes und von dessen Art. Bei organischen Schlämmen werden etwa 25 % und bei anorganischen Schlämmen etwa 50 % erreicht.

Durch die Schlammauslaßleitungen 10 wird portionsweise ein Schlammenge in die Kolbenzylindereinheiten 14 überführt, indem der Flachschieber 12 geöffnet wird, und der Kolben der Kolbenzylindereinheiten 14 aus der vorderen Stellung durch den Antrieb 15 nach hinten verfahren wird. Diese Füllbewegung kann ausgesprochen schonend und langsam erfolgen, um die Flockung des Schlamms zu erhalten. Die Anzahl von Kolbenzylindereinheiten 14 nehmen hierbei eine Schlammenge auf, welche etwa dem 1 1/2-fachen Volumen der Schlammkammer 20 entspricht. Es ist von besonderer Bedeutung, daß das Volumen der Einheiten 14 bzw. der entsprechenden Einrichtungen der weiter unten beschriebenen Ausführungsformen derart ist, daß bei lediglich einem Hub die Schlammkammer optimal gefüllt ist. Nach vollständiger Füllung der Kolbenzylindereinheiten 14 wird der Flachschieber 12 geschlossen und anschließend die Flachschieber 21, 24 geöffnet. Danach werden die Kolben der Kolbenzylindereinheiten 14 durch den Antrieb 15 in die vordere Stellung bewegt, so daß in der Schlammkammer 20 ein hydrostatischer Druck aufgebaut wird, da der Volumeninhalt der Kolbenzylindereinheiten 14 größer ist als das Volumen der Schlammkammer 20. Anschließend werden bevorzugt die Flachschieber, 21, 24 erneut geschlossen, und der Flachschieber 12 wiederum geöffnet, wonach der Kolben 14 erneut in seine hintere Stellung durch den Antrieb 15 bewegt wird, so daß die Kolbenzylindereinheiten 14 nochmals mit Schlamm befüllt werden. Danach wird der Flachschieber 12 wiederum geschlossen und die Flachschieber 21, 24 geöffnet und der Kolben der Kolbenzylindereinheiten jeweils erneut nach vorne bewegt, so daß hierdurch ein hydrostatischer Druck in der Schlammkammer 20 aufgebaut wird, welcher etwa 5 bar betragen kann. Nach Erreichen des hydrostatischen Drucks in der Schlammkammer 20 werden die Flachschieber 21 und 24 erneut geschlossen und die Kolbenzylindereinheiten werden durch Öffnen der Flachschieber 12 erneut vollständig befüllt, und stehen bereit für den nächsten Zyklus. Anschließend wird das Volumen der Schlammkammer 20 durch Betätigung von Hochdruckerzeugern 33 verkleinert, indem die untere Druckplatte 23 nach oben gegen die obere Druckplatte 22 gedrückt wird, und somit ein mechanischer Entwässerungsdruck erzeugt wird, welcher beispielsweise in der Größenordnung von etwa 30 bar liegen kann und welcher folglich erheblich größer ist als der zuvor erreichte hydrostatische Druck.

Nach Durchführung der zusätzlichen Entwässerung durch den mechanischen Entwässerungsdruck werden dann die Hochdruckerzeuger 33 entlastet, die Schlammkammer 20 geöffnet und der so erhaltene Filterkuchen durch horizontales Verfahren des Filterbandes 27 aus der Schlammkammer 20 ausgetragen. Das Filterband 27 wird dann horizontal zurückgefahren und dabei gewaschen. Danach wird die Schlammkammer erneut geschlossen und der oben beschriebene Zyklus kann erneut beginnen. Während der gesamten Zeit wird die Vorentwässerungsstufe 2 kontinuierlich mit frischem Schlamm beschickt, so daß der in dem Zwischenraum 100 enthaltene Schlamm 9 zwischen dem oberen Schlammspiegel 29 und dem unteren Schlammspiegel 30 schwankt.

Im folgenden wird näher auf die konstruktiven Details der Vorrichtung 1 eingegangen.

Wie in den Figuren 1 - 8 veranschaulicht, ist die obere Druckplatte 22 ortsfest und nicht beweglich ausgebildet und bildet gleichzeitig das Lager für die auf der oberen Druckplatte 22 angeordnete Vorentwässerungseinrichtung 2 und die Kolbenzylindereinheiten 14. Die Schlammkammer 20 weist beim Ausführungsbeispiel vier Schlammeinlässe 19 auf, an welche entsprechend vier Kolbenzylindereinheiten 14 angeschlossen ist, indem jeder der Kolbenzylindereinheiten 14 eine dazugehörige separate Verbindungsleitung 18 zugeordnet ist, die zu dem dazugehörigen Schlammeinlaß 19 der Schlammkammer 20 führt.

Wie bereits oben erwähnt und in den Figuren 1 - 8 der Zeichnungen gezeigt, sind bei der, den Ausgleichsbehälter 5 bildenden Vorentwässerungsstufe, welche einen kreisförmigen Querschnitt aufweist, zwei konzentrische Filterkörbe 7, 7a vorgesehen. Anstelle von zwei konzentrischen Filterkörben kann auch aus Kostengründen lediglich ein Filterkorb vorgesehen sein, indem der radial innere Filterkorb 7a durch eine Wandung ersetzt wird. An der jeweiligen Aussenseite der Filterkörbe 7, 7a ist eine Reinigungseinrichtung 38 vorgesehen, welche aus Waschdüsen 38 a und je mindestens einer, beim Ausführungsbeispiel vier, über die Höhe der Filterkörbe 7 und 7a reichenden Bürste 38 b, besteht. In dem Zwischenraum 100 zwischen den Filterkörben 7 und 7a ist ein, um eine senkrechte Achse in eine Betriebsstellung verschwenkbarer Abstreifer 65 vorgesehen, welcher auf einer Stange 35 a über die Höhe der Filterkörbe 7 und 7a aufwärts und abwärts bewegbar ist. Die aus der Wascheinrichtung 38 und dem Abstreifer 35 bestehende Einheit ist über einen Antrieb 34 drehangetrieben, sodaß durch Drehung dieser Einheit und die Aufwärts- und Abwärtsbewegung des in eine die beiden dem Zwischenraum 100 zugekehrten Seiten berührende Betriebsstellung verschwenkten Abstreifers 35 sowohl die Filtratseite als auch die Schlammseite der Filterkörbe 7, 7a gründlich gereinigt werden kann. Bei dem veranschaulichten Ausführungsbeispiel ist der Antrieb 34 durch einen Elektromotor 35 und ein Stirnradgetriebe 36 gebildet.

Die Bürsten 38b sind ebenfalls drehangetrieben und laufen auf die jeweilige Filtratseite der Filterkörbe 7, 7a um. Dieser Umlauf sorgt nicht nur für eine Reinigung der Filterkörbe 7, 7a, sondern erhöht gleichzeitig die Entwässerungsleistung der Vorentwässerungsstufe 2 erheblich, indem hierdurch auf der Schlammseite der Filterkörbe anhaftende Feststoffe immer wieder gelöst und zum Absinken gebracht werden. Hierdurch sinkt gleichzeitig der durch diese Feststoffe ansteigende Filtrationswiderstand bei jedem Umlauf der Bürste 38 b stark ab.

Wie am besten aus Fig. 1 ersichtlich, ist bei dem Ausführungsbeispisl die kontinuierliche Schlammzufuhr 6 durch einen Mischer 39 gebildet, welcher durch eine kontinuierlich laufende Pumpe beschickt wird, und welcher durch einen Motor 40 angetrieben ist, und dem Schlamm kontinuierlich in den Ausgleichsbehälter einspeist. In dem Mischer 39 wird gleichzeitig durch eine nicht dargestellte Dosiereinrichtung Flokkungsmittel zugesetzt, sodaß der Schlamm innerhalb des Mischers 39 bzw. des Ausgleichsbehälters 5 geflockt wird.

Im Boden des Zwischenraumes 100 sind bei dem dargestellten Ausführungsbeispiel vier Schlammauslässe 10 in Form von trichterförmigen Stutzen vorgesehen, welche mit den Schlammeinlässen 11 von vier Kolbenzylindereinheiten 14 unter Zwischenschaltung von je einem Flachschieber 12 verbunden sind. Die Anzahl der Schlammauslässe 10 und der Kolbenzylindereinheiten 14 entspricht der Anzahl der Schlammeinlässe 19 der Schlammkammer 20, wie dies am besten aus Fig. 5 ersichtlich ist.

Wie aus der Darstellung von Fig. 5 ersichtlich, weist die bevorzugt kreisförmig ausgebildete Schlammkammer 20 insgesamt vier Schlammeinlässe 19 auf, welche über vier Leitungen 18 unter Zwischenschaltung der bereits erläuterten Flachschieber 21 und 24 einzeln mit den Kolbenzylindereinheiten 14 verbunden sind.

Wie bereits oben erwähnt, besteht die eigentliche Filterpresse 4 aus der oberen Druckplatte 22 und der unteren Druckplatte 23, wobei die untere Druckplatte 23 gegen die ortsfeste obere Druckplatte 22 mittels der Hochdruckerzeuger 33 anhebbar und absenkbar ist. Die untere Druckplatte 23 weist auf der der Schlammkammer 20 zugewandten Seite die daran befestigte Lagerplatte 31 auf, welche in Richtung der Schlammkammer 20 offene Kanäle 75 zur Abführung des Filtrats aufweist. Die Lagerplatte 31 besteht bevorzugt aus einem reibungsarmen Kunststoff, da auf der Lagerplatte 31 das die Filterfläche 25 der Schlammkammer 20 bildende Filterband gleitet.

Bei dem dargestellten Ausführungsbeispiel ist das Filterband 27 horizontal hin- und herverfahrbar ausgebildet. Das Filterband 27 ist an seinen beiden Enden jeweils von einem umsteuerbaren Wickelantrieb 43 bzw. 44 aufgenommen, welche in seitlichen Verlängerungen 41 bzw. 42 der unteren beweglichen Druckplatte 23 gelagert sind. Folglich kann das Filterband 27 einmal auf den linken Wickelantrieb 43 aufgewickelt werden, d.h., die Filterfläche 25 der Schlammkammer 20 in die Schlammkammer hineinbewegt werden, wobei im umgekehrten Fall das Filterband 27 auf den rechten Wickelantrieb 44 aufgewickelt werden kannn, und die Filterfläche 25 aus der Schlammkammer 20 herausbewegt wird. Bei dem am Austragsende 45 der Filterpresse 4 liegenden Wickelantrieb 44 ist das Filterband 27 noch um eine Umlenkwalze 46 geführt, welcher ein Abstreifer 47 zugeordnet ist, um möglicherweise am Filterband 27 anhaftende Reste des Filterkuchens beim Austragen abzustreifen. Weiterhin sind in der rechten seitlichen Verlängerung 42 der beweglichen Druckplatte 23 noch Waschdüsen 49 vorgesehen, welche bei der Rückkehrbewegung des Filterbandes 27 in die geöffnete Schlammkammer 20 nach Abwurf des Filterkuchens betätigt werden können, um das Filterband 27 zu waschen.

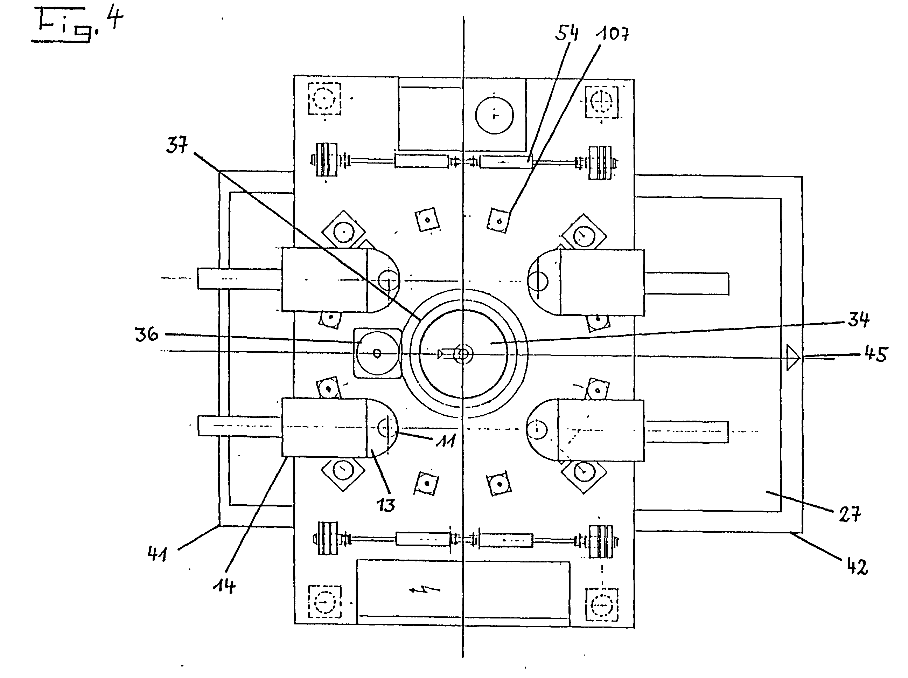

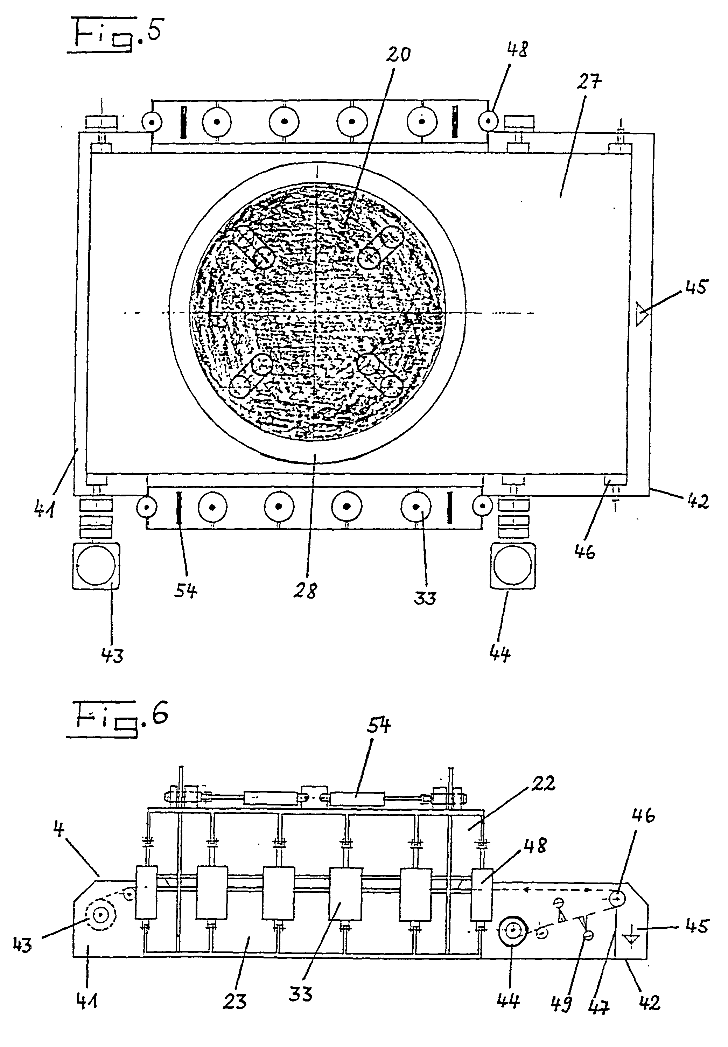

Wie ferner aus den Figuren 4 und 6 ersichtlich, ist es möglich, die Schlammkammer 20 in der geschlossenen Stellung mittels einer Sperrklinkenvorrichtung 54 zu verriegeln.

Durch die Sperrklinkenanordnung 54 wird gleichzeitig die durch Hubzylinder 48 nach oben bewegte untere Druckplatte 23 zunächst in ihrer Aufwärtsbewegung begrenzt, wodurch die Stellung der geschlossenen Schlammkammer 20 festgelegt wird.

Bei der in den Zeichnungen dargestellten Ausführungsform wird die Schlammkammer 20 zwischen den Druckplatten 22 und 23 durch eine ringförmige, die Schlammkammer 20 umgebende flexible Dichtung 28 und den, von dieser umschlossenen Bereich des Filterbandes 27, gebildet. Auf die Einzelheiten der Dichtung 28 wird weiter unten noch näher, unter Bezugnahme auf die Figuren 9 - 14, eingegangen.

Wie ferner noch insbesondere aus Fig. 4 ersichtlich, sind die Zylinderköpfe 13 der Kolbenzylindereinheiten 14 bevorzugt halbkugelförmig oder kegelstumpfförmig ausgebildet, um dadurch zur Schonung des geflockten Schlamms beim Einspeisen in die Schlammkammer 20 beizutragen.

Bei dem veranschaulichten Ausführungsbeispiel sind die Abmessungen derart getroffen, daß etwa 10 % der Gesamtfilterfläche auf die Schlammkammer 20 entfallen, während 90 % der Gesamtfilterfläche auf die Vorentwässerungsstufe 2, d.h., die beiden Filterkörbe 7 und 7a, entfallen. Pro qm der Filterfläche 25 in der Schlammkammer 20 werden bevorzugt zwei Kolbenzylindereinheiten 14 verwendet.

Im folgenden wird unter Bezugnahme auf die Figuren 9 - 11 eine erste Ausführungsform der Dichtung 28 näher erläutert. Die Figuren 9 - 11 zeigen hierbei drei verschiedene Betriebszustände der Filterpresse 4, d.h., Fig. 9 den vollständig geöffneten Zustand zum Austragen des Filterkuchens, Fig. 10 den geschlossenen Zustand während des Aufbaus des hydrostatischen Entwässerungsdrucks und Fig. 11 den Zustand beim Aufbringen des zusätzlichen mechanischen Entwässerungsdrucks.

Wie gezeigt, ist die Dichtung 28 unmittelbar an der oberen ortsfesten Druckplatte 22 befestigt, wobei die Dichtung 28 aus einem einstückigen, den Umfang der Schlammkammer 20 ringförmig umgebenden Körper aus elastischem Werkstoff, beispielsweise aus Gummi oder einem anderen geeigneten Werkstoff, besteht.

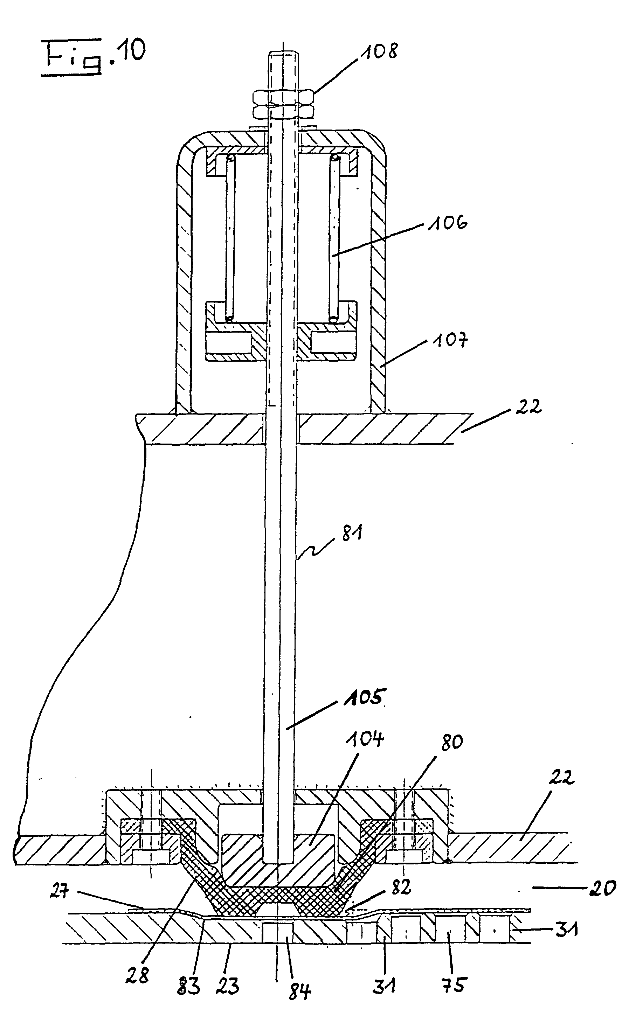

Der elastische Körper 80 steht in Form eines "W" unten von der oberen Druckplatte 22 vor und weist zwei Dichtlippen 101, 102 auf, welche mit dem Filterband 27 in Berührung gelangen. Zwischen den Dichtlippen ist auf der dem Filterband 27 zugewandten Seite eine Ringnut 103 vorgesehen. Auf der den Innenraum des Körpers 80 bildenden Seite ist die Dichtung 28 durch einen ringförmigen Körper 104 nach unten vorgespannt, welcher über Stangen 105 durch Federn 106 in Richtung des Filterbandes 27 federvorgespannt ist, wobei die Federn 106 in Gehäusen 107 auf der Oberseite der oberen Druckplatte 22 aufgenommen sind. Die Federvorspannung der Federn 106 ist über eine Gewindeeinrichtung 108 verstellbar. Wenn die Schlammkammer durch Bewegung der unteren Druckplatte 23 geschlossen wird, wie dies in Fig. 10 dargestellt ist, so wird die Dichtung 28 mit ausreichendem Druck durch die Federn 106 gegen das Filterband 27 gedrückt. Die hierzu erforderliche Kraft wird durch die allgemein mit 81 bezeichneten Stößel übertragen, welche durch die Stangen 105 gebildet sind.

Bei der Ausführungsform der Dichtung 28, wie sie in den Figuren 9 - 11 veranschaulicht ist, ist bevorzugt in dem der Dichtung 80 gegenüberliegenden Bereich 82 eine ringförmige flache Vertiefung 83 vorgesehen, welche die Dichtlippen 101, 102 aufnimmt, sodaß das Filterband 27 bei geschlossener Schlammkammer 20 in die Vertiefung 83, welche ausgesprochen flach ausgebildet ist, hineingedrückt wird.

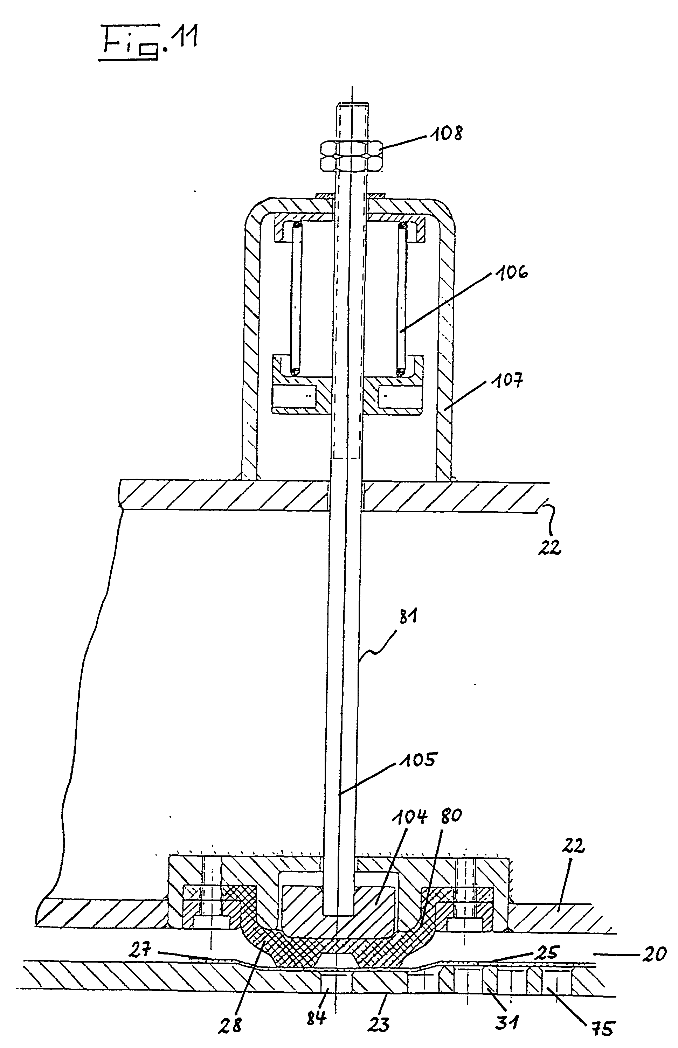

Da bei der in den Figuren 9 - 11 veranschaulichten Ausführungsform die Dichtung 28 zwei, durch die Ringnut 103 voneinander getrennte Dichtlippen 101, 102 aufweist, ist bevorzugt in dem der Ringnut 103 gegenüberliegenden Bereich innerhalb der Vertiefung 83 eine Anzahl von Entlastungsbohrungen 84 vorgesehen, durch welche die in der Ringnut 103 enthaltene Luft entweichen kann, wenn beispielsweise der in Fig. 11 dargestellte Druckzustand erreicht wird, in welchem der zusätzliche mechanische Entwässerungsdruck in der Schlammkammer 20 aufgebracht wurde, wobei die Dichtlippen 101, 102 eine starke Formänderung erfahren können. Gleichzeitig bilden die Vertiefung 83, die Entlastungsbohrungen 84 und die Dichtlippen 101, 102 mit der Ringnut 103 ein Entspannungslabyrinth indem noch eventuell hinter die erste Dichtlippe 101 durch das Filterband horizontal austretendes Filtrat durch die Entlastungsbohrungen 84 entspannt und abgeführt wird.

In den Figuren 12 - 14 ist eine abgewandelte Ausführungsform der Dichtung 28 veranschaulicht, wobei die gezeigten Betriebszustände den Betriebszuständen gem. den Figuren 9 - 11 entsprechen.

Wie gezeigt ist in diesem Falle die Dichtung 28 lediglich mit einer Dichtlippe 115 versehen, sodaß die Entlastungsbohrungen 84 in der flachen Vertiefung 83 entfallen können.

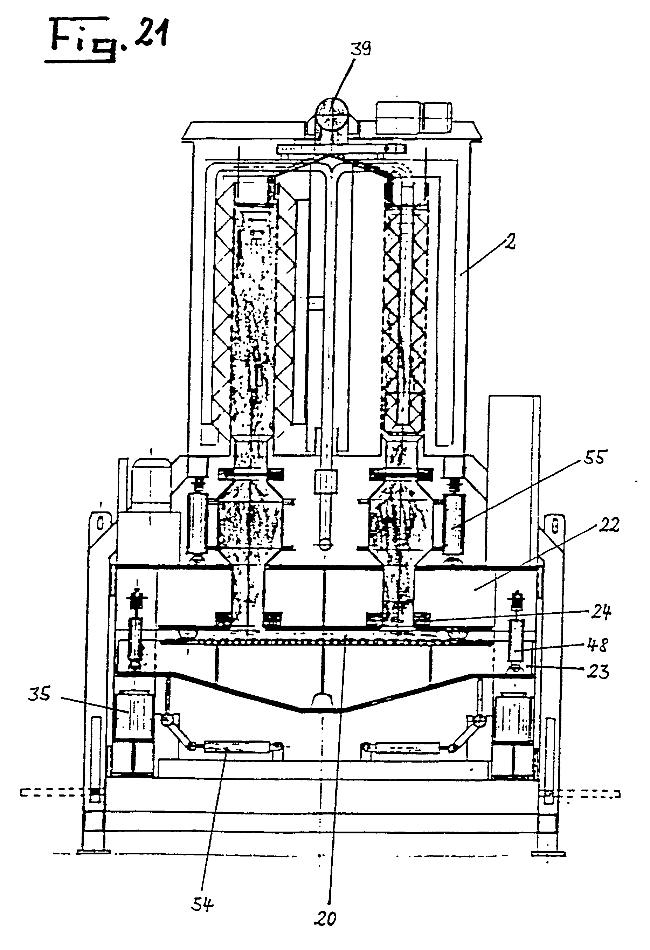

Die in den Fig. 15 - 35 in den verschiedenen Ansichten, Einzelheiten und Betriebszuständen dargestellte Ausführungsformen der Vorrichtung 1 nach der Erfindung entsprechen in ihrem grundsätzlichem Aufbau der Ausführungsform gem. den Fig. 1 bis 14, sodaß für gleiche Einzelheiten und Teile bzw. funktionsgleiche Einzelheiten und Teile gleiche Bezugszeichen in den Fig. 15 bis 35 verwendet wurden. Soweit diese Einzelheiten nicht erneut beschrieben werden, darf auf die vorstehende Beschreibung der Ausführungsform gem. den Fig. 1 bis 14 bezug genommen werden.

Die Ausführungsform der Vorrichtung 1 gem. den Fig. 15 bis 35 unterscheidet sich dahingehend wesentlich von der erstbeschriebenen, in den Figuren 1-8 veranschaulichten beispielhaften Ausführungsform, daß der Schlamm ohne jegliche Richtungsänderung von der Vorentwässerungsstufe 2 durch die Einrichtung 3 zur Erzeugung des hydrostatischen Entwässerungsdrucks in die Schlammkammer 20 der Filterpresse 4 gefördert wird.

Zu diesem Zweck ist die Einrichtung 3 zur Erzeugung des hydrostatischen Entwässerungsdrucks als ein oder mehrere im Volumen veränderbare Behälter 50 ausgebildet, wobei die Behälter 50 axial durchströmt sind und wobei die Achse der Behälter 50 mit den Achsen der Schlammauslaßleitung 10 der Vorentwässerungseinrichtung 2 und der Schlammeinlaßleitung 51 der Schlammkammer 20 liegt.

Bei der Ausführungsform gem. den Fig. 15 bis 22 sind die Behälter 50 als Faltenbälge 53 ausgebildet, wobei die Faltenbälge 53 unterhalb der die Schlammauslaßleitungen 10 der Vorentwässerungseinrichtung 2 steuernden Flachschieber 12 an der Vorentwässerungsstufe 2 aufgehängt sind.

Die Unterenden der die Behälter 50 bildenden Faltenbälge 53 enthalten die Schlammeinlaßleitung 51 in die Schlammkammer 20 und sind an der oberen Druckplatte 22 befestigt. Bei dem Ausführungsbeispiel gem. den Fig. 15 bis 21 sind die Schlammeinlaßleitungen der Schlammkammer 20, d.h., die Schlammeinlässe 19 der Schlammkammer 20 wie bei dem oben beschriebenen Ausführungsbeispiel durch eine Anzahl von Flachschiebern 24 gesteuert, welche in der oberen Druckplatte 22 gelagert sind.

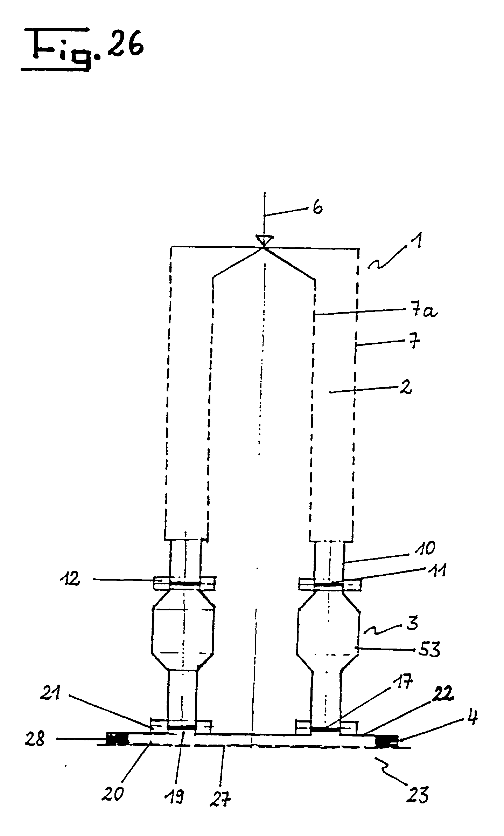

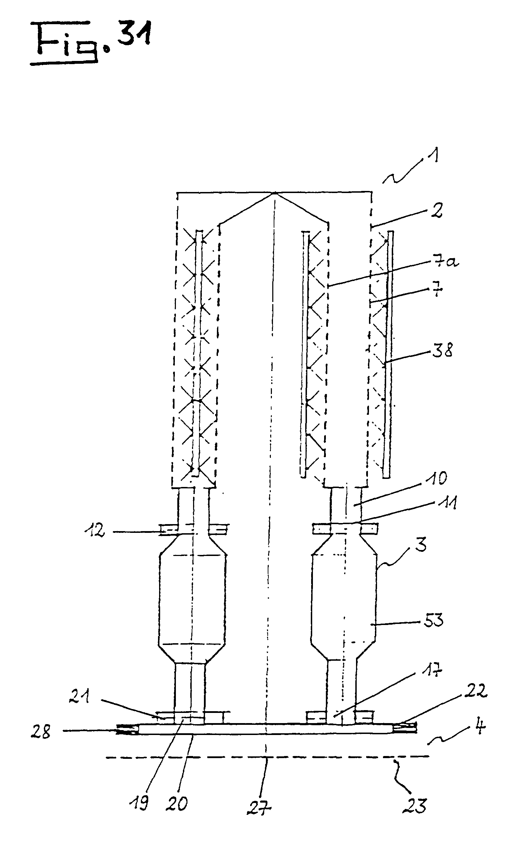

Um die Faltenbälge 53 als Einrichtung 3 zur Erzeugung des hydrostatischen Entwässerungsdrucks zu nutzen, sind bei dieser Ausführungsform die obere und untere Druckplatte 22 bzw. 23 bei geschlossener Schlammkammer 20 gemeinsam durch zusätzliche Hubzylinder 55 aufwärts und abwärts bewegbar, wobei sich die Hubzylinder 55 zwischen dem Rahmen 56 der Vorentwasserungsstufe 2 und der oberen Druckplatte 22 erstrecken. Die genaue Arbeitsweise der Faltenbälge 53 wird weiter unten unter Bezugnahme auf die Fig. 26 und 31 im einzelnen erläutert.

Bei der Ausführungsform gem. Fig. 22 ist anstelle einer Anzahl von die Schlammeinlässe 19 der Schlammkammern 20 steuernden Flachschiebern eine Drehscheibe 90 vorgesehen, welche sämtliche Schlammeinlässe 19 in die Schlammkammer 20 gleichzeitig steuert. Einzelheiten dieser Drehscheibe 90 werden weiter unten unter Bezugnahme auf die Fig. 32 bis 35 näher erlautert.

Bei der Ausführungsform der Vorrichtung 1 wie sie in den Fig. 23 bis 25 dargestellt ist, sind anstelle der Faltenbälge 53 als Behälter 50 seitlich zusammendrückbare Gummibälge 52 vorgesehen, welche nach Art von Balgpumpen ausgebildet sind. Auch hier wird der Schlamm ohne jegliche Richtungsänderung von der Vorentwässerungsstufe 2 durch die Behälter 50 zur Erzeugung des hydrostatischen Entwässerungsdrucks in die Schlammkammer 20 der Filterpresse 4 gefördert.

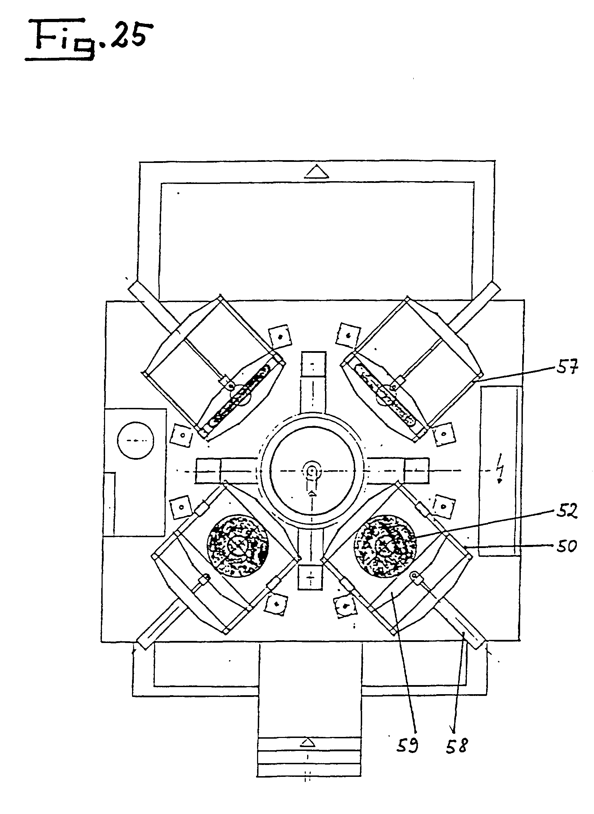

Wie insbesondere aus Fig. 25 ersichtlich, sind die Gummibälge 52 in Gehäusen 57 angeordnet und werden seitlich, durch Antriebe bewegte Platten 59, zusammengedrückt oder aufgeweitet. In Fig. 25 sind in der oberen Hälfte die zusammengedrückten Gummibälge 52 dargestellt, während in der unteren Hälfte von Fig. 25 die Gummibälge 52 aufgeweitet sind, was selbstverständlich zwei unterschiedlichen Betriebszuständen der Vorrichtung 3 zur Erzeugung des hydrostatischen Entwässerungsdrucks entspricht, da im praktischen Betrieb sämtliche Gummibälge 52 immer gleichzeitig gefüllt oder entleert werden.

Zur Erläuterung der Betriebsweise der Ausführungsform gem. den Fig. 15 bis 22 der Vorrichtung 1 nach der Erfindung, wird nun auf die Fig. 25 bis 31 bezug genommen, in denen die Vorrichtung stark schematisch veranschaulicht ist, um die Arbeitsweise besser verständlich machen zu können.

In dem in Fig. 26 veranschaulichten Betriebszustand ist der Zustand des Schichtbeginns, d.h., der Zustand der Betriebsaufnahme, veranschaulicht. In diesem Zustand füllt die kontinuierliche Schlammzufuhr 6 zunächst die Vorentwässerungsstufe 2, wobei die den Schlammeinlaß der Faltenbälge 53 steuernden Flachschieber 12 und die den Schlammauslaß 17 der Faltenbälge 53 steuernden Flachschieber 21 geschlossen sind, und wobei ferner die zwischen der oberen Druckplatte 22 und der unteren Druckplatte 23 befindliche Schlammkammer 20 in der angehobenen Stellung angeordnet ist, in der die Faltenbälge 53 ihr zusammengeschobenes, kleinstmögliches Volumen aufweisen.

Gleichzeitig ist die Schlammkammer 20 geschlossen und durch die Sperrklinkenvorrichtung 54 (in den Fig. 26 bis 30 nicht dargestellt) verriegelt.

Die Füllzeit und Füllhöhe der Vorentwässerungsstufe 2 ist selbstverständlich je nach Medium regelbar, wobei die Aufenthaltszeit und Füllhöhe den in der Vorentwässerungsstufe 2 erreichten Entwässerungsgrad bestimmt.

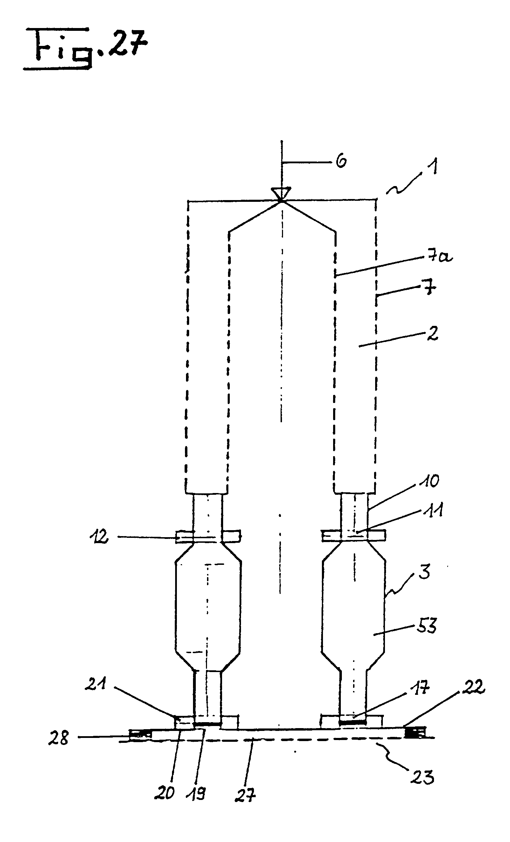

Bei dem in Fig. 27 veranschaulichten Betriebszustand füllt die kontinuierliche Schlammzufuhr 6 weiterhin die Vorentwässerungsstufe 2, welche ja die Funktion eines Ausgleichsbehälters 5 hat. Die unterhalb der Schlammauslaßleitung 10 der Vorentwässerungsstufe 2 angeordneten Flachschieber 12 sind geöffnet, so daß die Schlammeinlässe 11 der Faltenbälge 53 geöffnet sind.

Gleichzeitig werden die obere Druckplatte 22 und die untere Druckplatte 23, d.h. die geschlossene Schlammkammer 20, abgesenkt, wobei die den Schlammauslaß 17 der Faltenbälge 53 bzw. den Schlammeinlaß 19 der Schlammkammer 20 steuernden Flachschieber 21 geschlossen sind. Bei diesem Arbeitstakt werden daher die Faltenbälge 53 aus der Vorentwässerungsstufe 2 mit Schlamm gefüllt, wobei das Füllen derart erfolgt, daß der Schlamm ohne seine Richtung zu ändern, unmittelbar senkrecht nach unten aus der Vorentwässerungsstufe 2 in die Faltenbälge 53 gelangt.

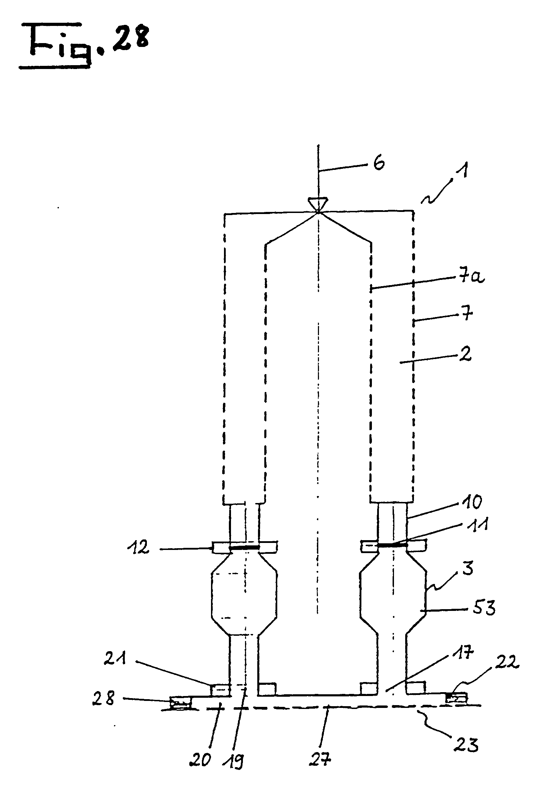

Wie in Fig. 28 dargestellt, werden anschließend die oberen, die Schlammeinlässe 11 der Faltenbälge 53 steuernden Flachschieber 12 geschlossen, wobei die kontinuierliche Schlammzufuhr 6 weiter die Vorentwässerungsstufe 2 mit Schlamm beschickt. Zu diesem Zeitpunkt sind die unteren, die Schlammeinlässe 19 der Schlammkammer 20 regelnden Flachschieber 21, geöffnet und die obere Druckplatte 22 und die untere Druckplatte 23 werden mit der Schlammkammer 20 nach oben bewegt, sodaß die Faltenbälge 53 zusammengedrückt werden. Hierbei wird die Schlammkammer 20 mit Schlamm gefüllt, welcher gleichzeitig einem hydrostatischen Entwässerungsdruck entsprechend der Volumenverkleinerung der Faltenbälge 53 ausgesetzt wird. Die Füllzeit und der Fülldruck der Schlammkammer 20 ist je nach Medium regelbar.

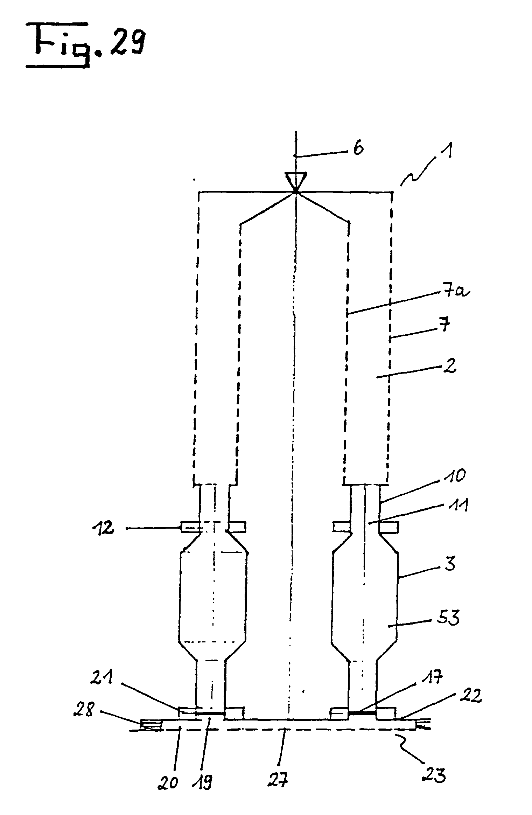

Bei dem anschließenden in Fig. 29 gezeigten Betriebszustand läuft die kontinuierliche Schlammzufuhr 6 weiter und füllt weiterhin die Vorentwässerungsstufe 2.

Die oberen Flachschieber 12, welche den Schlammeinlaß 11 der Faltenbälge 53 steuern, sind geöffnet, die unteren Flachschieber 21, welche die Schlammeinlässe 19 der Schlammkammer steuern, sind geschlossen und die zwischen der oberen Druckplatte 22 und der unteren Druckplatte 23 befindliche Schlammkammer 20 ist wiederum zu ihrem unteren Totpunkt abgesenkt, so daß die Faltenbälge 53 aufgefahren werden und mit der nächsten Charge des Schlamms gefüllt werden.

In diesem Betriebszustand wird der in der Schlammkammer 20 enthaltene Schlamm dem mechanischen erhöhten Entwässerungsdruck ausgesetzt, indem die Hochdruckerzeuger (nicht dargestellt) die untere Druckplatte 23 gegen die obere Druckplatte 22 drücken.

In der Schlammkammer 20 ist während des Arbeitens der Hochdruckerzeuger der Preßdruck je nach Medium regelbar, wobei der Preßdruck und die Preßzeit dem in der Hochdruckstufe erreichten Entwässerungsgrad bestimmen.

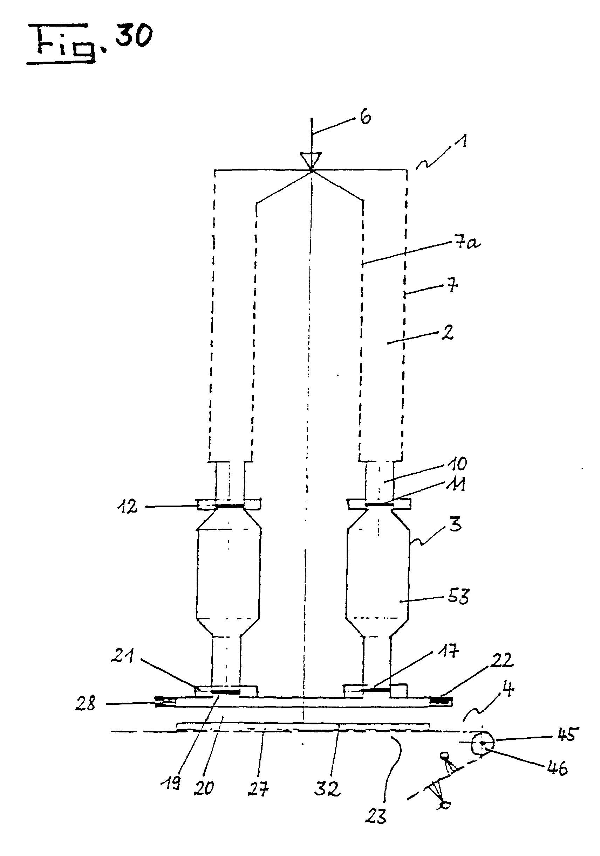

In dem in Fig. 30 dargestellten Betriebszustand ist das Ende eines Arbeitstaktes der erfindungsgemäßen Vorrichtung gezeigt, indem hier bei weiterlaufender kontinuierlicher Schlammzufuhr 6 und vollständig ausgefahrenen Faltenbälgen 53, d.h., vollständig mit Schlamm gefüllten Faltenbälgen 53, die oberen, die Schlammeinlässe 11 zu den Faltenbälgen 53 steuernden Flachschieber 12 geschlossen sind und die unteren Flachschieber 21 welche die Schlammeingänge 19 zu der Schlammkammer 20 steuern, ebenfalls geschlossen sind.

Die Schlammkammer 20 ist nach Öffnen der nichtdargestellten Sperrklinkenvorrichtung 54 durch weiteres Absenken der unteren Druckplatte 23 geöffnet und der vollständig entwässerte Filterkuchen 32 kann nun durch Verfahren des Filterbandes 27 über das Austragsende 45 abgeworfen werden, wobei das Filterband 27 gleichzeitig gewaschen wird.

Im Anschluß an den in Fig. 30 dargestellten Betriebszustand wird die Schlammkammer 20 durch Anheben der unteren Druckplatte 23 und Verriegelung durch die Sperrklinkenvorrichtung 54 erneut geschlossen und nach Öffnen der unteren Flachschieber 21, d. h. Öffnen der Schlammeinlässe 19 der Schlammkammer 20 in dem in Fig. 28 dargestellten Betriebszustand zurückgekehrt.

Die Taktzeit der in den Fig. 28 bis 30 dargestellten Betriebszustände wird durch den Arbeitstakt der Hochdruckstufe, d.h. der Filterpresse 4 bestimmt und ist je nach Medium regelbar, wobei die inaktive Schaltzeit der Schlammkammer 20 in der Filterpresse 4 jeweils nur eine Minute beträgt. Diese eine Minute ist erforderlich um den in Fig. 30 dargestellten Vorgang durchzuführen, nämlich die Schlammkammer 20 zu öffnen, den Filterkuchen 32 mittels des Filterbandes 27 auszutragen, das Filterband 27 gleichzeitig zu waschen und die Schlammkammer 20 erneut zu schliessen.

In Fig. 31 ist noch ein Betriebszustand veranschaulicht, welcher dem Schichtende entspricht, wobei die kontinuierliche Schlammzufuhr 6 abgeschaltet ist und die gesamte Vorrichtung 1 gereinigt wird. Hierzu wird die Vorentwässerungsstufe 2 in den vorausgehenden Takten leergefahren und die Faltenbälge 53 ebenfalls entleert. Nachdem der letzte Filterkuchen aus der Schlammkammer 20 ausgetragen wurde, werden sowohl die oberen als auch die unteren Flachschieber 12 bzw. 21 geöffnet und die Filterkörbe 7, 7a der Vorentwässerungsstufe 2 mittels der Reinigungseinrichtung 38 gereinigt, wobei gleichzeitig die übrigen Bestandteile der Vorrichtung 1 ebenfalls gereinigt werden.

Aus obenstehender Beschreibung der Arbeitsweise ist offensichtlich, daß bei dieser Ausführungsform nach der Erfindung, d.h. mit im Volumen veränderbaren Behältern 50 der zu entwässernde Schlamm nach Durchlaufen des Mischers 39 keinerlei Richtungsänderung mehr erfährt, bis er die Schlammkammer 20 gefüllt hat. Hierdurch ist eine ausgesprochen schonende Behandlung des geflockten Schlamms gewährleistet.

In den Fig. 32 bis 35 ist noch in näheren Einzelheiten die Drehscheibe 90 veranschaulicht, welche bei der Ausführungsform gem. Fig. 22 anstelle der die Schlammeinlässe 19 der Schlammkammer 20 steuernden Flachschieber 21 sämtliche Schlammeinlässe 19 der Schlammkammer 20 gleichzeitig steuert. Die Drehscheibe 90 ist innerhalb der Schlammkammer 20 an der oberen Druckplatte 22 gelagert und durch Federn 91 gegen die Druckplatte 22 nach oben vorgespannt, wobei in der Druckplatte 22 eine Dichtung 92 vorgesehen ist, gegen die die Drehscheibe 90 anliegt. Die Drehscheibe 90 weist eine Anzahl von Einlassöffnungen 93 auf, deren Zahl und Anordnung der Anzahl und Anordnung der Schlammeinlässe 19 in die Schlammkammer 20 entspricht.

Die Drehscheibe 90 ist an einer Achse 94 befestigt, welche sich nach oben durch die obere Druckplatte 22 in eine Lagerung 95 erstreckt. Durch einen Antrieb 96 kann die Achse 94 in einem Winkel von etwa maximal 45 ° hin und her gedreht werden, wobei die Einlassöffnungen 93 mit den Schlammeinlässen 19 entweder fluchten oder diese verschließen.

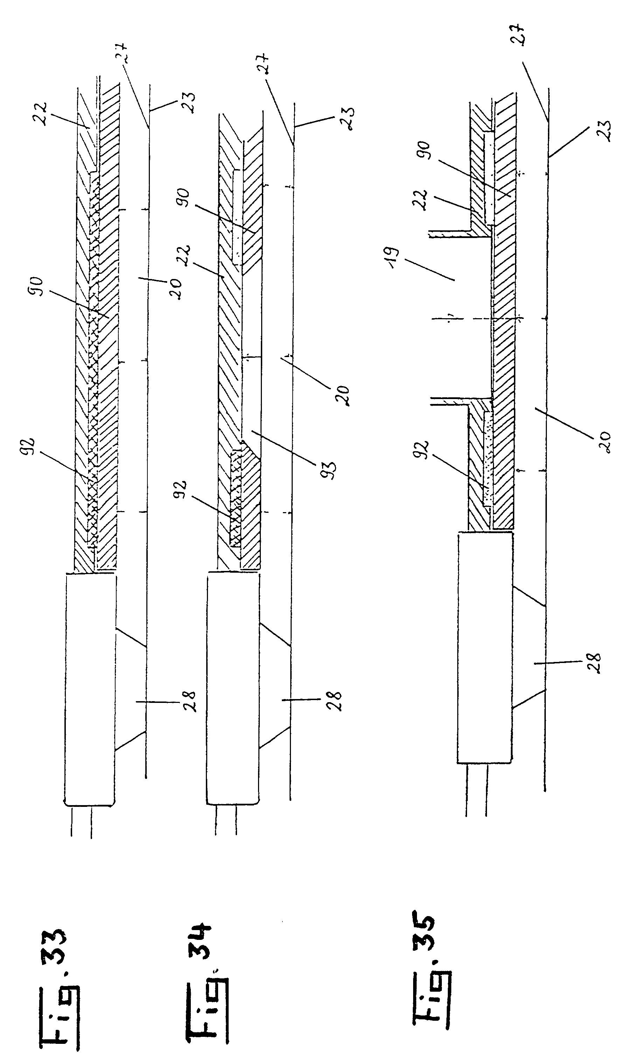

In den Fig. 33 bis 35 sind die verschiedenen Stellungen der Drehscheibe 90 veranschaulicht, welche sie zusätzlich zu der in Fig. 32 veranschaulichten Stellung einnehmen kann, wobei in Fig. 32 der Zustand gezeigt ist, bei welchem die Schlammeinlässe 19 der Schlammkammer 20 geöffnet sind, um die Schlammkammer 20 zu füllen und mit einem hydrostatischen Entwässerungsdruck bis etwa 3 bar zu beaufschlagen.

In den Fig. 33 und 34 sind Stellungen der Drehscheibe 90 gezeigt, bei welchen die Einspeiseöffnungen, d.h., die Schlammeinlässe 19 der Schlammkammer 20 geschlossen sind und in der Schlammkammer 20 durch den mechanischen Entwässerungsdruck eine Hochdruckentwässerung bis etwa 20 bar erfolgt.

Bei der in Fig. 35 gezeigten Stellung der Drehscheibe 90 sind sämtliche Schlammeinlässe 19 ebenfalls gesperrt, während beispielsweise die Faltenbälge 53 aus der Vorentwässerungsstufe 2 mit Schlamm gefüllt werden.

Durch diese Art der Konstruktion wird der bauliche Aufwand stark verringert, indem anstelle einer Vielzahl von Flachschiebern ein einziges Sperrorgan verwendet wird.

## Patentansprüche

1. Vorrichtung (1) zum Entwässern von Schlamm und ähnlichen Substanzen, mit einer Filterflächen (25,27) aufweisenden Schlammkammer (20), mit mindestens einem Schlammeinlaß (19), mit einer einen hydrostatischen Filtrationsdruck erzeugenden Einrichtung (3), welche einen mit der Vorentwässerungseinrichtung (2) verbundenen Schlammeinlaß (10) und einen mit dem mindestens einen Schlammeinlaß (10) der Schlammkammer (20) verbundenen Schlammauslaß (17) aufweist, wobei am Schlammeinlaß (10) und am Schlammauslaß (17) alternierend betätigbare Sperr- und Steuerventile (12, 21) angeordnet sind, wobei die Schlammkammer (20) durch obere und untere Druckplatten (22,23) gebildet ist, von denen mindestens eine zur Verringerung des Volumens der Schlammkammer (20) nach Erreichen des hydrostatischen Entwässerungsdrucks zur Erzeugung eines zusätzlichen mechanischen Entwässerungsdrucks durch Hochdrukkerzeuger (33) relativ bewegbar ist, wobei ferner eine Filterflächen (7) enthaltende Vorentwässerungseinrichtung (2) vorgesehen ist, welche als Ausgleichsbehälter (5) ausgebildet und an eine kontinuierliche Schlammzufuhr (6) angeschlossen und mit der, den hydrostatischen Filtrationsdruck erzeugenden Einrichtung (3) verbunden ist, wobei die Filterflächen (27) der Schlammkammer (20) zum Austragen des Filterkuchens (32) nach Öffnen der Druckplatten (22,23) bezüglich der Schlammkammer (20) verschiebbar ausgebildet sind, **dadurch gekennzeichnet, daß** die Einrichtung (3) zur Erzeugung des hydrostatischen Filtrationsdrucks als ein oder mehrere volumenveränderbare Behälter (50) ausgebildet ist und daß die Behälter (50) axial durchströmt sind, wobei die Behälterachse in den Achsen der Schlammauslaßleitung (10) der Vorentwässerungseinrichtung (2) und der Schlammeinlaßleitung (51) der Schlammkammer (20) liegt.

2. Vorrichtung nach Anspruch 1, **dadurch gekennzeichnet, daß** die Behälter (50) als seitlich zusammendrückbare Gummibälge (52) nach Art von Balgpumpen ausgebildet sind.

3. Vorrichtung nach Anspruch 1, **dadurch gekennzeichnet, daß** die Behälter (50) als in der Länge axial veränderbare Faltenbälge (53) ausgebildet sind.

4. Vorrichtung nach einem der Ansprüche 1 - 3, **dadurch gekennzeichnet, daß** die Schlammkammer (20) mehrere Schlammeinlässe (19) aufweist, daß eine entsprechende Anzahl von Behältern (50) vorgesehen ist, bei denen jeder Schlammauslaß (17) durch eine separate Verbindung (18, 18') mit einem der Schlammeinlässe (19) der Schlammkammer (20) verbunden ist.

5. Vorrichtung nach einem der Ansprüche 1 - 4, **dadurch gekennzeichnet, daß** die Sperr- und Steuerventile (12, 21) als die Anzahl von Schlammeinlässen (10) und/oder die Anzahl von Schlammauslässen (17) jeweils gleichzeitig öffnende bzw. schließende Drehscheiben (90) ausgebildet sind, daß die der Anzahl von Schlammauslässen (17) zugeordnete Drehscheibe (90) unmittelbar an den Schlammeinlässen (19) der Schlammkammer (20) angeordnet ist, und daß die Drehscheibe (90) durch Federn (91) gegen eine Dichtung (92) vorgespannt ist.

6. Vorrichtung nach einem der vorstehenden Ansprüche, **dadurch gekennzeichnet, daß** die Filterflächen (26) der Vorentwässerungseinrichtung (2) etwa 90 % und die Filterflächen (25) der Schlammkammer (20) etwa 10 % der gesamten Filterflächen der Vorrichtung (1) betragen, daß die Schlammkammer (20) einen runden Umriß aufweist, und daß die Filterflächen (25) der Schlammkammer (20) durch ein auf der beweglichen unteren Druckplatte (23) geradlinig hin und her verfahrbares Filterband (27) gebildet sind.

7. Vorrichtung nach einem der vorstehenden Ansprüche, **dadurch gekennzeichnet, daß** die Schlammkammer (20) durch eine an der oberen Druckplatte (22) befestigte ringförmige flexible Dichtung (28) umgeben ist, und daß die Dichtung (28) mittels in der oberen Druckplatte (22) gelagerten Stößeln (81) in Richtung der unteren Druckplatte (23) federvorgespannt ist.

8. Vorrichtung nach einem der vorstehenden Ansprüche, **dadurch gekennzeichnet, daß** innerhalb der Schlammkammer (20) die Filterfläche (25) auf einer Lagerplatte (31) abgestützt ist, welche mit zur Filterfläche (25) offenen Kanälen (75) versehen ist, und daß die Kanäle (75) als Bohrungen ausgebildet sind.

9. Vorrichtung nach Anspruch 8, **dadurch gekennzeichnet, daß** die Lagerplatte (31), in dem der Dichtung (28) gegenüberliegenden Bereich (82), eine flache kreisförmige Vertiefung (83) aufweist, und daß in der Vertiefung (83) Entlastungsbohrungen (84) vorgesehen sind.

10. Vorrichtung nach einem der vorstehenden Ansprüche, **dadurch gekennzeichnet, daß** die Hochdruckerzeuger (33) seitlich außerhalb des Bereichs der Schlammkammer (20) angeordnet sind, und daß die Hochdruckerzeuger (33) als hydraulische Einfachzylinder ausgebildet sind.

11. Vorrichtung nach einem der vorstehenden Ansprüche, **dadurch gekennzeichnet, daß** die geschlossene Stellung der Schlammkammer (20) mechanisch verriegelbar ist, und daß zur Verriegelung eine auf die untere bewegliche Druckplatte (23) wirkende Sperrklinkenvorrichtung (54) vorgesehen ist.

12. Vorrichtung nach einem der vorstehenden Ansprüche, **dadurch gekennzeichnet, daß** die Vorentwässerungseinrichtung (2) einen kreisförmigen Querschnitt aufweist, daß die Vorentwässerungseinrichtung (2) zwei konzentrische Filterkörbe (7, 7a) enthält, deren Zwischenraum (100) mit der kontinuierlichen Schlammzufuhr (6) verbunden ist, daß die Schlammauslässe (10a) im Boden des Zwischenraums (100) zwischen den Filterkörben (7, 7a) angeordnet sind, und daß die Schlammeinlässe (11) der Behälter (50) unmittelbar unter den Schlammauslässen (10a) angeordnet sind.

13. Vorrichtung nach Anspruch 12, **dadurch gekennzeichnet, daß** auf der Filtratseite jedes Filterkorbes (7, 7a) drehangetriebene Bürsten (38b) vorgesehen sind, welche über die Höhe der Filterkörbe (7, 7a) reichen.

14. Vorrichtung nach einem der Ansprüche 3 - 13, **dadurch gekennzeichnet, daß** die Faltenbälge (53) an der Vorentwässerungseinrichtung (2) aufgehängt sind, und daß zur Erzeugung des hydrostatischen Filtrationsdrucks die obere und untere Druckplatte (22, 23) gemeinsam bei geschlossener Schlammkammer (20) anhebbar sind, derart, daß hierbei die Faltenbälge (53) zusammengedrückt werden.

## Claims

1. Apparatus (1) for the dewatering of sludge and similar substances having a sludge chamber (20) containing filter areas (25, 27) with at least one sludge inlet (19), a means (3) for creating a hydrostatic filtration pressure, which is having a sludge inlet (10) connected to a predewatering device and a sludge outlet (17) connected to the at least one sludge inlet (19) of the sludge chamber (20), wherein at the sludge inlet (10) and at the sludge outlet (17) there are provided alternately operable closing and control valves (21), wherein the sludge chamber (20) is formed by upper and lower pressure plates (22, 23) at least one of which being relatively movable to decrease the volume of the sludge chamber (20) after reaching the hydrostatic dewatering pressure for creating an additional mechanical dewatering pressure by high pressure generators (33), wherein further a predewatering apparatus (2) containing filter areas (7) is provided which is performed as a compensation container (5) and is connected to a continuous sludge feed (6) and connected with the means (3) for creating the hydrostatic filtration pressure, wherein the filter areas (27) of the sludge chamber (20) after opening the pressure plates (22, 23) are displaceable with respect to the sludge chamber (20) for ejecting the filter cake (32), **characterized in that** the means (3) for creating the hydrostatic filtration pressure is performed as one or ore containers (50), which are changeable in volume and **in that** the flow through the containers (50) is axial, wherein the axis of a container (50) is positioned in the axes of the sludge outlet line (10) of the predewatering device (2) and of the sludge inlet line (51) of the sludge chamber (20).

2. Apparatus according to claim 1, **characterized in that** the containers (50) are performed as laterally compressible rubber bellows (52) similar to bellow pumps.

3. Apparatus according to claim 1, **characterized in that** the containers (50) are performed as concertina bellows (53) being changeable in length.

4. Apparatus according to any of the claims 1 to 3, **characterized in that** the sludge chamber (20) is having a number of sludge inlets (19), that a corresponding number of containers (50) is provided in which each sludge outlet (17) thereof is connected by a separate connection (18, 18') with one of the sludge inlets (19) of the sludge chamber (20).

5. Apparatus according to any of the claims 1 to 4, **characterized in that** the closing and control valves (21) are performed as turning disks (90) simultaneously opening or closing, respectively, the plurality of sludge inlets (10) and/or the plurality of sludge outlets (17), that the turning disk (90) associated with the plurality of sludge outlets (17) is directly positioned at the sludge inlets (19) of the sludge chamber (20) and **in that** the turning disk (90) is biased by the means of springs (91) against a seal (92).

6. Apparatus according to claim 1 or 2, **characterized in that** the filter areas (26) of the predewatering device (2) are about 90 % of the entire filter area of the apparatus (1) and that the filter areas (25) of the sludge chamber (20) are about 10 % thereof, that the sludge chamber (20) is having a circular circumference and **in that** the filter areas (25) of the sludge chamber (20) are formed by a rectilinearily reciprocable filter belt (27) on the movable lower pressure plate (23).

7. Apparatus according to any of the preceding claims, **characterized in that** the sludge chamber (20) is enclosed by an annular flexible seal (28) mounted at the upper pressure plate (22) and **in that** the seal (28) by means of push-rods (81) supported in the upper pressure plate (22) is biased in the direction of the lower pressure plate (23).

8. Apparatus according to any of the preceding claims, **characterized in that** within the sludge chamber (20) the filter area (25) is supported by a bearing plate (31) which is having channels (75) open towards the filter area (25) and **in that** the channels (75) are performed as bores.

9. Apparatus according to claim 8, **characterized in that** the bearing plate (31) is having a shallow annular recess (83) in an area (82) opposite to the seal (28) and **in that** relief bores (84) are provided in the recess (83).

10. Apparatus according to any of the preceding claims, **characterized in that** the high pressure generators (33) are positioned laterally outside the area of the sludge chamber (20) and **in that** the high pressure generators (33) are performed as hydraulic single acting cylinders.

11. Apparatus according to any of the preceding claims, **characterized in that** the closed position of the sludge chamber (20) is mechanically lockable and **in that** for locking a detent device (54) is provided acting on the lower movable pressure plate (23).

12. Apparatus according to any of the preceding claims, **characterized in that** the predewatering device (2) is having a circular cross-section, that the predewatering device (2) is containing two concentric filter baskets (7, 7a), the gap (100) between the same being connected to the continuous sludge feed (6), that the sludge outlets (10a) are provided in the bottom of the gap (100) between the filter baskets (7, 7a) and **in that** the sludge inlets (11) of the containers (50) are directly positioned below the sludge outlets (10a).

13. Apparatus according to claim 12, **characterized in that** on the filtrate side of each filter baskets (7, 7a) there are provided rotationally driven brushes (38b) reaching over the height of the filter baskets (7, 7a).

14. Apparatus according to any of the claims 3 to 13, **characterized in that** the concertina bellows (53) are suspended on the predewatering device (2) and **in that** for creating the hydrostatic filtration pressure the upper and the lower pressure plates (22, 33) with the sludge chamber (20) being closed are liftable in unison such that doing so the concertina bellows (53) are compressed.

## Revendications

1. Dispositif (1) de déshydratation de boues et de substances similaires, comportant une chambre à boues (20) présentant des surfaces de filtrage (25, 27), avec au moins une entrée (19) des boues, comportant un dispositif (3) qui produit une pression de filtration hydrostatique, et qui comporte une entrée (10) des boues reliée au dispositif de pré-déshydradation (2) ainsi qu'une sortie (17) des boues reliée à la ou aux entrées (10) de la chambre à boues (20), des soupapes d'arrêt et de commande (12, 21), qui peuvent être actionnées en alternance, étant disposées à l'entrée (10) et à la sortie (17) des boues, la chambre à boues (20) étant formée par des plaques de pression supérieure et inférieure (22, 23) dont une au moins est relativement mobile, afin de réduire le volume de la chambre à boues (20) après que la pression hydrostatique de déshydratation a été atteinte, pour produire une pression de déshydratation mécanique supplémentaire au moyen de générateurs haute pression (33), un dispositif de pré-déshydratation (2) contenant des surfaces de filtrage (7), qui est réalisé sous la forme d'un récipient de compensation (5), étant en outre prévu et raccordé à une arrivée continue (6) des boues, et relié au dispositif (3) produisant la pression de filtration hydrostatique, les surfaces de filtrage (27) de la chambre à boues (20) étant réalisées déplaçables par rapport à la chambre à boues (20), en vue de l'extraction du gâteau de filtrage (32) après ouverture des plaques de pression (22, 23), **caractérisé en ce que** le dispositif (3) destiné à produire la pression de filtration hydrostatique est réalisé sous la forme d'un ou plusieurs récipients (50) à volume variable et **en ce que** l'écoulement à travers les récipients (50) s'effectue axialement, l'axe des récipients se situant dans les axes du conduit d'extraction (10) des boues du dispositif de pré-déshydradation (2) et du conduit d'entrée (51) de la chambre à boues (20).

2. Dispositif selon la revendication 1, **caractérisé en ce que** les récipients (50) sont réalisés sous la forme de soufflets en caoutchouc (52) qui peuvent être comprimés latéralement à la manière de pompes à soufflet.

3. Dispositif selon la revendication 1, **caractérisé en ce que** les récipients (50) sont réalisés sous la forme de soufflets (43) dont la longueur est variable axialement.

4. Dispositif selon l'une des revendications 1 à 3, **caractérisé en ce que** la chambre à boues (20) comporte plusieurs entrées (19) des boues, **en ce qu'**il est prévu un nombre correspondant de récipients (50) dont chaque sortie (17) des boues est reliée, par une liaison (18, 18') séparée, à l'une des entrées (19) de la chambre à boues (20).

5. Dispositif selon l'une des revendications 1 à 4, **caractérisé en ce que** les soupapes d'arrêt et de commande (12, 21) sont réalisées sous la forme de disques tournants (90) qui ouvrent ou ferment simultanément le nombre d'entrées (10) et/ou le nombre de sorties (17) des boues, **en ce que** le disque tournant (90) affecté au nombre de sorties (17) des boues est disposé directement aux entrées (19) de la chambre à boues (20), et **en ce que** le disque tournant (90) est précontraint par des ressorts (91) contre une garniture d'étanchéité (92).

6. Dispositif selon l'une des revendications précédentes, **caractérisé en ce que** les surfaces de filtrage (26) du dispositif de pré-déshydratation (2) représentent environ 90 % et les surfaces de filtrage (25) de la chambre à boues (20) environ 10 % de toutes les surfaces de filtrage du dispositif (1), **en ce que** la chambre à boues (20) présente un contour circulaire, et **en ce que** les surfaces de filtrage (25) de la chambre à boues (20) sont formées par une bande de filtrage (27) déplaçable en ligne droite dans un sens et dans l'autre, sur la plaque de pression inférieure (23) mobile.

7. Dispositif selon l'une des revendications précédentes, **caractérisé en ce que** la chambre à boues (20) est entourée par une garniture d'étanchéité (28) annulaire et flexible, fixée à la plaque de pression (22) supérieure, et **en ce que** la garniture d'étanchéité (28) est précontrainte en direction de la plaque de pression (23) inférieure, au moyen de poussoirs (81) montés dans la plaque de pression (22) supérieure.

8. Dispositif selon l'une des revendications précédentes, **caractérisé en ce qu'**à l'intérieur de la chambre à boues (20), la surface de filtrage (25) est soutenue sur une plaque de support (31) qui est pourvue de canaux (75) ouverts vers la surface de filtrage (25), et **en ce que** les canaux (75) sont réalisés sous la forme de perçages.

9. Dispositif selon la revendication 8, **caractérisé en ce que** la plaque de support (31) présente un renfoncement (83) circulaire et plat dans la zone (82) qui fait face à la garniture d'étanchéité (28), et **en ce que** dans le renfoncement (83) sont prévus des perçages de décharge (84).

10. Dispositif selon l'une des revendications précédentes, **caractérisé en ce que** les générateurs haute pression (33) sont disposés latéralement à l'extérieur de la zone de la chambre à boues (20), et **en ce que** les générateurs haute pression (33) sont réalisés sous la forme de cylindres hydrauliques simples.

11. Dispositif selon l'une des revendications précédentes, **caractérisé en ce que** la position fermée de la chambre à boues (20) peut être verrouillée mécaniquement, et **en ce que** pour le verrouillage, il est prévu un dispositif à cliquet d'arrêt (54) qui agit sur la plaque de pression (23) inférieure et mobile.

12. Dispositif selon l'une des revendications précédentes, **caractérisé en ce que** le dispositif de pré-déshydratation (2) présente une section circulaire, **en ce que** le dispositif de pré-déshydratation (2) contient deux paniers de filtrage (7, 7a) concentriques dont le volume intermédiaire (100) est relié à l'arrivée (6) continue des boues, **en ce que** les sorties (10a) des boues sont disposées dans le fond du volume intermédiaire (100), entre les paniers de filtrage (7, 7a), et **en ce que** les entrées (11) des boues des récipients (50) sont disposées directement sous les sorties (10a) des boues.

13. Dispositif selon la revendication 12, **caractérisé en ce que** sur le côté du filtrat de chaque panier de filtrage (7, 7a) sont prévues des brosses (38b) entraînées en rotation qui s'étendent sur la hauteur des paniers de filtrage (7, 7a).

14. Dispositif selon l'une des revendications 3 à 13, **caractérisé en ce que** les soufflets (53) sont accrochés au dispositif de pré-déshydradation (2), et **en ce que** pour produire la pression de filtration hydrostatique, la plaque de pression supérieure (22) et la plaque de pression inférieure (23) peuvent être relevées ensemble lorsque la chambre à boues (20) est fermée, de manière qu'ainsi les soufflets (53) soient comprimés.
